# EUROPÄISCHE PATENTSCHRIFT

(11) **EP 1 697 387 B1**
(45) Veröffentlichungstag und Bekanntmachung des Hinweises auf die Patenterteilung: **15.07.2009**
(21) Anmeldenummer: 04820839.1
(22) Anmeldetag: 29.10.2004
(51) Int. Cl.: C07F 9/02, C07F 9/6571, C07F 9/6574

(54) **VERFAHREN ZUR HERSTELLUNG VON DREIWERTIGEN ORGANOPHOSPHOR-VERBINDUNGEN**
METHOD FOR PRODUCING TRIVALENT ORGANOPHOSPHORUS COMPOUNDS
PROCEDE POUR PRODUIRE DES COMPOSES ORGANOPHOSPHORES TRIVALENTS

(30) Priorität: 23.12.2003 DE 10360771
(43) Veröffentlichungstag der Anmeldung: 06.09.2006
(73) Patentinhaber: Evonik Oxeno GmbH, 45772 Marl (DE)
(72) Erfinder: ORTMANN, Dagmara, 45657 Recklinghausen (DE); WIESE, Klaus-Diether, 45721 Haltern am See (DE); MÖLLER, Oliver, 45665 Recklinghausen (DE); FRIDAG, Dirk, 45721 Haltern am See (DE)
(74) Vertreter: Hirsch, Hans-Ludwig
(86) Internationale Anmeldenummer: PCT/EP2004/052729
(87) Internationale Veröffentlichungsnummer: WO 2005/063776

(56) Entgegenhaltungen:
- EP-A- 0 213 639
- EP-A- 1 201 675
- WO-A-95/14659
- DE-A1- 1 903 356
- US-A- 4 769 498
- MARTIN L M: "Facile Reduction in the Synthesis of Phosphorylcholine Affinity Columns" TETRAHEDRON LETTERS, ELSEVIER SCIENCE PUBLISHERS, AMSTERDAM, NL, Bd. 37, Nr. 44, 28. Oktober 1996 (1996-10-28), Seiten 7921-7924, XP004031006 ISSN: 0040-4039
- LOT O. ET AL.: "New electron deficient aminophosphonite-phosphite ligands for asymmetric hydroformylation of styrene" JOURNAL OF MOLECULAR CATALYSIS A. CHEMISTRY, Nr. 164, 2000, Seiten 125-130, XP002323407 in der Anmeldung erwähnt

## Beschreibung

Die vorliegende Erfindung betrifft ein Verfahren zur Herstellung von Organophosphiten, Organophosphoniten und Organophosphiniten durch Kondensation von Phosphortrihalogeniden oder Organophosphorhalogeniden mit organischen, Hydroxy-Gruppen tragenden Verbindungen in Gegenwart von polymeren basischen Ionentauscherharzen.

Organophosphor-Verbindungen haben wegen ihres breiten Anwendungsbereichs eine erhebliche industrielle Bedeutung erlangt. Sie werden beispielsweise als Weichmacher, Flammschutzmittel, UV-Stabilisatoren und Antioxidantien eingesetzt. Darüber hinaus stellen sie wichtige Zwischenprodukte bei der Herstellung von Fungiziden, Herbiziden, Insektiziden und Pharmazeutika dar. Entsprechend ist eine große Zahl von Herstellungsverfahren entwickelt worden. Eine besondere Bedeutung unter den Organophosphor-Verbindungen hat die Substanzklasse der Organophosphite. Ein Überblick über die Herstellungsmethoden für Organophosphite ist u.a. von K. Sasse in "Methoden der Organischen Chemie" (Houben-Weyl), Band XXII/2, Kapitel 1, Thieme Verlag, Stuttgart (1964) und L. Maier, G. Kosolapoff, "Organic Phosphorus Compounds, Band 4, John Wiley & Sons, S. 255 - 462 sowie den darin enthaltenen Literaturverweisen zu finden.

Die Herstellung von Triarylphosphiten durch Umsetzung von Phosphortrihalogeniden mit geeigneten Phenolen gelingt in Anwesenheit eines Katalysators in einem inerten Lösemittel bei Temperaturen von 150 bis 200°C (DE 20 28 878, DE 20 07 070). Der entstehende Chlorwasserstoff wird in-situ abdestilliert. Dieses Verfahren weist eine Reihe von Nachteilen auf. Um die in-situ-Destillation des Chlorwasserstoffs zu bewerkstelligen sind hohe Temperaturen notwendig. Besonders bei erhöhter Temperatur ist Chlorwasserstoff ausgesprochen korrosiv und erfordert daher den Einsatz spezieller Materialien beim Anlagenbau. Zudem sind die Reaktionszeiten sehr lang, was einen hohen Anteil an Nebenprodukten und damit eine aufwändige Reinigung des Rohprodukts zur Folge hat.

Technisch vorteilhafter ist deshalb oft die Kondensation von Phosphortrihalogeniden, Monoaryldichlorophosphiten oder Halogendiarylchlorophosphiten mit Phenolen in Gegenwart von basischen Verbindungen, die den entstehenden Chlorwasserstoff abfangen. Als Basen werden meist Stickstoffverbindungen eingesetzt, etwa Trialkylamine (DD 301615, US 4,415,686, JP 54030140), Dimethylformamid (JP 10053595, EP 511156), N,N-Dialkylaniline oder Stickstoff-Heterocyclen wie Pyridin (G. Kosolapoff, "Organophosphorus Compounds", John Wiley & Sons (1950), S. 184). Andere Verfahren wenden Alkali- und/oder Erdalkalihydroxide an (EP 0032202). In JP 54030140 ist die Kondensation von Phosphortrihalogeniden mit Phenolen in Gegenwart unterstöchiometrischer Mengen von Aminen, Ammoniumsalzen, Carbonsäuren Guanidinen, Amiden, Amidinen, Sulfonen und Phosphinen beschrieben.

Die Schrift WO 91/09040 beschreibt die Herstellung von sterisch gehinderten Triarylphosphiten, ausgehend von den korrespondierenden Phenolen und Phosphortrihalogenid in Anwesenheit von Mercaptothiazolen und Dithiocarbaminsäure-Derivaten.

Ein Überblick über die Synthesemethoden der Organophosphonite ist beispielsweise in Houben-Weyl, "Methoden der Organischen Chemie", XII/1, S. 44 ff. gegeben. Ein Überblick über die Methoden für die Synthese von Organophosphiniten ist in Houben-Weyl, "Methoden der Organischen Chemie", XII/1, S. 210 ff. gegeben.

Ein Nachteil der technisch bekannten Verfahren ist die Abtrennung der Base und/oder ihrer Reaktionsprodukte bzw. der Katalysatoren bei der Aufarbeitung des Organophosphor-Rohprodukts. Eine destillative Trennung ist wegen der geringen Dampfdrücke der beteiligten Komponenten oft schwer möglich oder sogar unmöglich. Wenn eine feste Base eingesetzt wird und/oder die Reaktionsprodukte der Base in fester Form anfallen oder eine Ausfällung der Base und/oder ihrer Reaktionsprodukte möglich ist, kann eine Abtrennung vom Rohprodukt durch Filtration oder Sedimentation erfolgen. Diese Trennoperationen sind bekanntermaßen im industriellen Maßstab, insbesondere bei kontinuierlicher Verfahrensweise, im technischen Aufbau und Betrieb ausgesprochen aufwändig. Sie sind empfindlich gegenüber Änderungen der Betriebsparameter und/oder Art und Eigenschaften der zu trennenden Substanzen. In der Regel ist auch der Einsatz großer Lösemittelmengen erforderlich, zum Beispiel, um Wertprodukt vom Filterkuchen zu waschen. Dies gelingt oft jedoch nur unvollständig (US 5,710,307).

Bei Einsatz von tertiären Aminen, insbesondere Triethylamin, können die ausfallenden Trialkylammoniumhalogenide zu einem starken Anstieg der Viskosität der Reaktionsmasse und zur Bildung von Wandbelägen führen. Unter diesen Bedingungen sind Rühren und Wärmeaustausch erheblich erschwert. Um diesem Nachteil zu begegnen, schlägt die Schrift EP 1 234 831 längerkettige tertiäre Amine wie Tri-n-propylamin, Tri-iso-propylamin, Tri-n-butylamin, Tri-iso-butylamin und Tri-tert-butylamin vor. Die weiter oben genanten prinzipiellen Nachteile der Filtration bleiben im technischen Maßstab aber dennoch bestehen.

Eine weitere Aufarbeitung der Organophosphor-Rohprodukte kann durch dem Fachmann bekannte Verfahren erfolgen, beispielsweise durch (fraktionierte) Kristallisation, Sublimation, Fällung oder chromatographische Verfahren ggf. auch durch Destillation oder Rektifikation. Auch der Einsatz dieser Trennverfahren ist im industriellen Maßstab mit großem technischen Aufwand verbunden.

Die Schrift EP 0 285 136 beansprucht ein Verfahren zur Reinigung von tertiären Organophosphiten von fünfwertigen Organophosphor-Verbindungen, die als Nebenprodukte der Synthese oder auch als Abbau- bzw. Hydrolyseprodukte der tertiären Organophosphite entstehen. Das Verfahren sieht eine Behandlung des gelösten verunreinigten Organophosphits mit Wasser bei erhöhter Temperatur in Gegenwart einer Lewis-Base vor. Als Lewis-Basen werden anorganische Salze (Carbonate, Hydroxide, Oxide), tertiäre Amine und Polymere, die Amin-Gruppen tragen, eingesetzt.

Die Synthese der Organophosphor-Verbindungen selbst wird jedoch nicht angesprochen. Ein Nachteil des beanspruchten Verfahrens liegt in der Behandlung mit Wasser. Nicht nur die zu entfernenden Verunreinigungen sondern auch die tertiären Organophosphite selbst reagieren unter den genannten Bedingungen, so dass, je nach Hydrolysestabilität der Organophosphite, ein Teil des Wertprodukts verloren geht.

In DE 100 53 272 wird die Herstellung von Diphosphiten beschrieben, bei denen eine Phosphiteinheit einen Salicylsäurebaustein aufweist. In DE 100 58 383 wird die Herstellung von Phosphininen beschrieben, die zumindest zwei Phosphoratome aufweisen. In DE 101 14 868 101 14 868 wird die Herstellung von Diphosphinen beschrieben. In DE 101 40 083 und DE 101 40 072 wird die Herstellung von Diphosphiten beschrieben, bei denen beide Phosphiteinheiten einen Salicylsäurebaustein aufweisen. In DE 101 400 86 wird die Herstellung von Monophosphiten beschrieben, die einen Salicylsäurebaustein aufweisen. In DE 102 10 918 wird die Herstellung von Diphosphiten beschrieben, bei denen zumindest ein Phosphit ebenfalls ein Salicylsäurebaustein aufweist. In allen vorgenannten Dokumenten wird bei der Umsetzung von Phosphorhalogeniden mit Alkoholen die Verwendung von tertiären Aminen, insbesondere von Triethylamin, Pyridin oder N-Methylpyrrolidinon, beschrieben.

Die bekannten Verfahren weisen einen oder mehreren der folgenden Nachteile auf:
a) Die vollständige Abtrennung der eingesetzten Base vom Zielprodukt ist aufwändig
b) Die bei der Umsetzung entstandenen Salze der eingesetzten Base sind häufig voluminös oder fallen in einer Korngrößenverteilung an, die die Abtrennung durch Filtration erschwert.
c) Die Einhaltung der gewünschten Reaktionstemperatur ist wegen der hohen Exothermie schwierig.
Die Aufgabe der vorliegenden Erfindung bestand deshalb in der Bereitstellung eines einfachen Verfahrens zur Herstellung von dreiwertigen Organophosphor-Verbindungen, das einen oder mehrere dieser Nachteile nicht aufweist.

Überraschenderweise wurde gefunden, dass diese Aufgabe dadurch gelöst werden konnte, dass trivalente organische Phosphorverbindungen, die mindestens eine P-O-Bindung aufweisen, durch Umsetzung von einer trivalenten Phosphorverbindung, bei der mindestens ein Halogenatom am Phosphoratom gebunden ist, mit einer organischen Verbindung, die mindestens eine OH-Gruppe aufweist, in Gegenwart von polymeren, schwach basischen Ionenaustauscherharzen auf Basis von Styrol-Divinylbenzol-Copolymeren, die N,N-DialkylAmin-Gruppen tragen, die in der Form des freien Amins vorliegen, hergestellt werden. Dies ist insbesondere deshalb überraschend, da trotz der Verwendung eines heterogenen Substrates zum Abfangen des entstehenden Halogenwasserstoffes keine Einbussen bei der Ausbeute zu verzeichnen waren.

Gegenstand der vorliegenden Erfindung ist deshalb ein Verfahren zur Herstellung von dreiwertigen Organophosphor-Verbindungen durch Kondensation von Phosphorverbindungen der Formel i

PHalₐR₍₃₋ₐ₎ (i)

wobei Hal = Halogenid, ausgewählt aus Chlor, Brom und Iod, wobei beim Vorhandensein mehrerer Halogenide (a > 1) diese gleich oder unterschiedlich sein können, R = über ein Kohlenstoff- oder Sauerstoff-Atom an das Phosphor gebundener organischer Rest, der vorzugsweise zumindest 2, besonders bevorzugt zumindest 3 Kohlenstoffatome aufweist, wobei wenn a < 2 ist, die vorhandenen Reste R gleich oder unterschiedlich sein können, und a = 1 bis 3 bedeuten,
mit organischen Verbindungen, die zumindest eine OH-Gruppe aufweisen, welches dadurch gekennzeichnet ist, dass die Umsetzung in Gegenwart von polymeren, schwach basischen Ionenaustauscherharzen auf Basis von Styrol-Divinylbenzol-Copolymeren, die N,N-DialkylAmin-Gruppen tragen, die in der Form des freien Amins vorliegen, durchgeführt wird.

Das erfindungsgemäße Verfahren hat gegenüber den herkömmlichen Verfahren folgende Vorteile:
a) Es entstehen keine salzartigen Nebenprodukte, die nur schwer vom Zielprodukt getrennt werden können.
b) Die eingesetzte Base liegt als Feststoff vor, der trotz Reaktion mit dem Halogenwasserstoff seinen Aggregatzustand nicht ändert und im Wesentlichen seine Größe beibehält. Der üblicherweise als Packung oder Perlen vorliegende Ionenaustauscher des erfindungsgemäßen Verfahrens kann mit einfachsten Mitteln aus dem Reaktionsgemisch entfernt werden, z.B. durch Verwendung von grobmaschigen, auf die Größe der Ionentauscherpartikel abgestimmte Siebe.
c) Ein Anhaften von großen Mengen an Wertprodukt wird allein durch die Größe und Form des Ionenaustauschers verhindert. Durch die Verwendung von Packungen bzw. Partikeln von relativ großer Partikelgröße ist die Oberfläche des Ionenaustauschers im Vergleich zum Volumen klein gegenüber einer ausgefällten Base herkömmlicher Art. Es sind deshalb bei dem erfindungsgemäßen Verfahren auch nur geringe Mengen an Lösemittel notwendig, um evtl. anhaftendes Wertprodukt von der Oberfläche der verbrauchten Base abzuspülen.
d) Bei Verwendung von Ionenaustauscher ist die Geschwindigkeitskonstante der Umsetzung geringer als bei Verwendung von homogen gelösten Basen. Dadurch bedingt, wird die
e) Es entstehen während der Reaktion keine voluminöse Salze, die aufgrund der durch sie bewirkten Anstieg der Viskosität zu Konzentrations- und Temperaturunterschiede im Reaktionsgemisch verursachen können.

Das erfindungsgemäße Verfahren wird nachfolgend beispielhaft beschrieben, ohne dass die Erfindung auf diese Ausführungsformen beschränkt sein soll. Dem Fachmann ergeben sich weitere Varianten, die ebenfalls Gegenstand der vorliegenden Erfindung, deren Anwendungsbreite sich aus der Beschreibung und den Patentansprüchen ergibt, sind.

Das erfindungsgemäße Verfahren zur Herstellung von dreiwertigen Organophosphor-Verbindungen durch Kondensation von Phosphorverbindungen der Formel **i**

PHalₐR(₃₋ₐ) (i)

wobei Hal = Halogenid, ausgewählt aus Chlor, Brom und Iod, wobei beim Vorhandensein mehrerer Halogenide (a > 1) diese gleich oder unterschiedlich sein können, R = über ein Kohlenstoff- oder Sauerstoff-Atom an das Phosphor gebundener organischer Rest, der vorzugsweise zumindest 2, besonders bevorzugt zumindest 3 Kohlenstoffatome aufweist, wobei wenn a < 2 ist, die vorhandenen Reste **R** gleich oder unterschiedlich sein können und gegebenenfalls miteinander kovalent verknüpft sein können, und a = 1 bis 3 bedeuten, mit organischen Verbindungen, die zumindest eine OH-Gruppe aufweisen, zeichnet sich dadurch aus, dass die Kondensationsreaktion in Gegenwart zumindest eines basischen, insbesondere schwach basischen Ionenaustauscherharzes, also Ionenaustauscher, die beispielsweise in der Form des freien Amins (nicht in der OH-Form) vorliegen, durchgeführt wird.

Als Phosphorverbindung der Formel i wird bevorzugt zumindest eine Verbindung, ausgewählt aus den Verbindungen der nachfolgenden Formeln 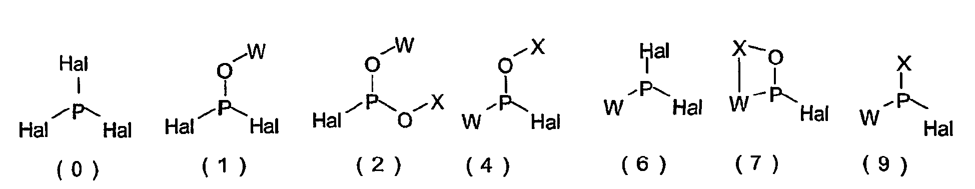 mit Hal gleich Halogenid, W und X gleich substituierte oder unsubstituierte, aliphatische, alicyclische, aliphatisch-alicyclische, heterocyclische, aliphatisch-heterocyclische, aromatisch-aromatische oder aliphatisch-aromatische Kohlenwasserstoffreste mit 1 bis 50 Kohlenstoffatomen, wobei X und W gleich oder unterschiedlich oder kovalent miteinander verknüpft sein können, eingesetzt. Die substituierten Kohlenwasserstoffreste können z.B. einen oder mehrere Substituenten, ausgewählt aus primären, sekundären oder tertiären Alkylgruppen, alicyclischen Gruppen, aromatischen Gruppen, -N(R⁵)₂, -NHR⁵, -NH₂, Fluor, Chlor, Brom, Jod, -CN, -C(O)-R⁵, -C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wie z.B. einen Alkylrest, insbesondere Methyl-, Ethyl-, Propyl- oder n-Butyl- oder tert.-Butylrest oder z.B. einen Arylrest, insbesondere Phenyl- oder Naphthylrest, aufweisen. Sind mehrere Kohlenwasserstoffreste R⁵ vorhanden, so können diese gleich oder unterschiedlich sein.

Die Substituenten sind vorzugsweise beschränkt auf solche, die keinen Einfluss auf die Reaktion selbst haben. Besonders bevorzugte Substituenten können ausgewählt sein aus den Halogenen, wie z.B. Chlor, Brom oder Jod, den Alkylresten, wie z.B. Methyl, Ethyl, Propyl, iso-Propyl, Butyl, sec.-Butyl, t-Butyl, neo-Pentyl, sec-Amyl, t-Amyl, iso-Octyl, t-Octyl, 2-Ethylhexyl, iso-Nonyl, iso-Decyl oder Octadecyl, den Arylresten, wie z.B. Phenyl, Naphthyl oder Anthracyl, den Alkylarylresten, wie z.B. Tolyl, Xylyl, Dimethylphenyl, Diethylphenyl, Trimethylphenyl, Triethylphenyl oder p-Alkylphenyl, den Aralkylresten, wie z.B. Benzyl oder Phenylethyl, den alicyclischen Resten, wie z.B. Cyclopentyl, Cyclohexyl, Cyclooctyl, Cyclohexylethyl oder 1-Methylcyclohexyl, den Alkoxyresten, wie z.B. Methoxy, Ethoxy, Propoxy, Butoxy oder Pentoxy, den Aryloxyresten, wie z.B. Phenoxy oder Naphthoxy, -OC(O)R⁵ oder -C(O)R⁵, wie z.B. Acetyl, Propionyl, Trimethylacetoxy, TriEthylacetoxy oder Triphenylacetoxy, und den drei Kohlenwasserstoffreste aufweisenden Silylresten (-Si(Hydrocarbyl)₃, wie z.B. Trimethylsilyl, Trimethylsilyl oder Triphenylsilyl.

Von den oben aufgeführten Phosphortrihalogeniden und Organophosphorhalogeniden werden bevorzugt Phosphortrichlorid und die Organophosphorchloride eingesetzt.
Weisen die in dem erfindungsgemäßen Verfahren eingesetzten Verbindungen Amingruppen, also -NH₂, -N(R⁵)₂ oder NHR⁵ auf, so müssen diese in Gleichgewichtsreaktionen gegenüber den Amingruppen des Ionenaustauschers als schwächere Base fungieren. Verbindungen die Amingruppen aufweisen und die diese Bedingung nicht erfüllen können nicht (direkt) als Edukte in dem erfindungsgemäßen Verfahren eingesetzt werden. Eine Möglichkeit den Einsatz solcher Verbindungen doch zu ermöglichen besteht darin, die entsprechenden Gruppen durch den Einbau von Schutzgruppen auf bekannte Art und Weise zu schützen und nach der Durchführung des erfindungsgemäßen Verfahren die Schutzgruppe wieder zu entfernen.

Als Hydroxy-Gruppen-aufweisende Kupplungskomponente können in den erfindungsgemäßen Kondensationsreaktionen aliphatische, alicyclische, aliphatisch-alicyclische, heterocyclische, aliphatisch-heterocyclische, aromatisch-aromatische, aliphatisch-aromatische Verbindungen mit 1 bis 50 Kohlenstoffatomen eingesetzt werden, die eine, zwei oder mehr Hydroxy-Gruppen aufweisen. Für die Herstellung von Monophosphorverbindungen nach dem erfindungsgemäßen Verfahren werden ausschließlich Verbindungen eingesetzt, die nur eine OH-Gruppe aufweisen. Für die Herstellung von zwei oder mehr Phosphoratome aufweisende Verbindungen werden entsprechend Verbindungen eingesetzt, die zwei bzw. mehr OH-Gruppen aufweisen.

Bevorzugt werden in dem erfindungsgemäßen Verfahren als zumindest eine Hydroxy-Gruppe aufweisende Verbindung zumindest eine substituierte oder unsubstituierte Verbindung, ausgewählt aus aliphatischen Alkoholen mit bis zu 19 Kohlenstoffatomen wie z.B. Methanol, Ethanol, n-Propanol, i-Propanol, 1-butanoyl, 2-Butanol, t-Butanol, 2-Ethylhexanol, i-Nonanol, i-Decanol, i-Tridecanol, OH-substituierte aromatische Verbindungen, wie z.B. Phenol und Phenol-Derivate, 1,4-Dihydroxybenzol, 1,2-Dihydroxybenzol, 1,8-Dihydroxynaphtalin, 1,1'-Binaphtyl-2,2'-diol oder 2,2'-Binaphtyl-1,1'-diol, Di- oder Polyole, wie z.B. Glykole, Zucker, wie z.B. Cyclodextrine eingesetzt wird, wobei die substituierten Verbindungen Substituenten, ausgewählt aus primären, sekundären oder tertiären Alkylgruppen, alicyclischen Gruppen, aromatischen Gruppen, -N(R⁵)₂, -NHR⁵, -NH₂, Fluor, Chlor, Brom, Jod, -CN, -C(O)-R⁵, - C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, aufweisen. Sind mehrere Kohlenwasserstoffreste R⁵ vorhanden, so können diese gleich oder unterschiedlich sein. Die Substituenten sind vorzugsweise beschränkt auf solche, die keinen Einfluss auf die Reaktion selbst haben. Besonders bevorzugte Substituenten können ausgewählt sein aus den Halogenen, wie z.B. Chlor, Brom oder Jod, den Alkylresten, wie z.B. Methyl, Ethyl, Propyl, iso-Propyl, Butyl, sec.-Butyl, t-Butyl, neo-Pentyl, sec-Amyl, t-Amyl, iso-Octyl, t-Octyl, 2-Ethylhexyl, iso-Nonyl, iso-Decyl oder Octadecyl, den Arylresten, wie z.B. Phenyl, Naphthyl oder Anthracyl, den Alkylarylresten, wie z.B. Tolyl, Xylyl, Dimethylphenyl, Diethylphenyl, Trimethylphenyl, Triethylphenyl oder p-Alkylphenyl, den Aralkylresten, wie z.B. Benzyl oder Phenylethyl, den alicyclischen Resten, wie z.B. Cyclopentyl, Cyclohexyl, Cyclooctyl, Cyclohexylethyl oder 1-Methylcyclohexyl, den Alkoxyresten, wie z.B. Methoxy, Ethoxy, Propoxy, Butoxy oder Pentoxy, den Aryloxyresten, wie z.B. Phenoxy oder Naphthoxy, -OC(O)R⁵ oder -C(O)R⁵, wie z.B. Acetyl, Propionyl, Trimethylacetoxy, TriEthylacetoxy oder Triphenylacetoxy, und den drei Kohlenwasserstoffreste aufweisenden Silylresten (-Si(R⁵)₃, wie z.B. Trimethylsilyl, Triethylsilyl oder Triphenylsilyl.

Durch das erfindungsgemäße Verfahren kann als dreiwertige Organophosphor-Verbindung bevorzugt zumindest eine Verbindung, ausgewählt aus den Verbindungen der nachfolgenden Formeln 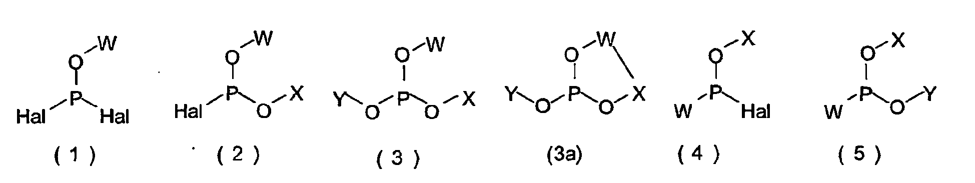 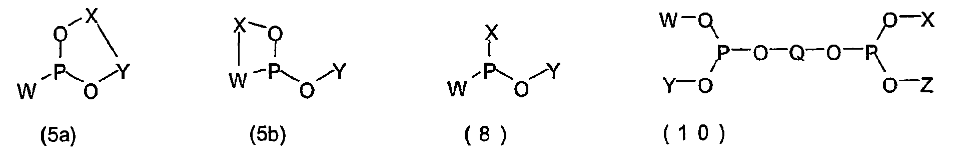 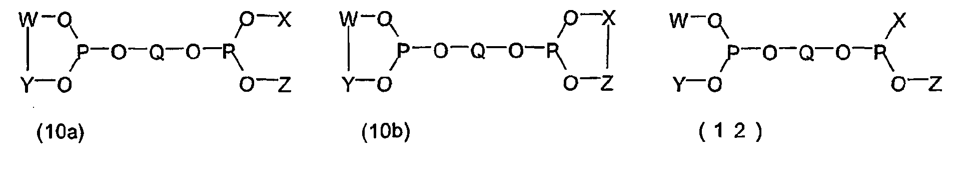 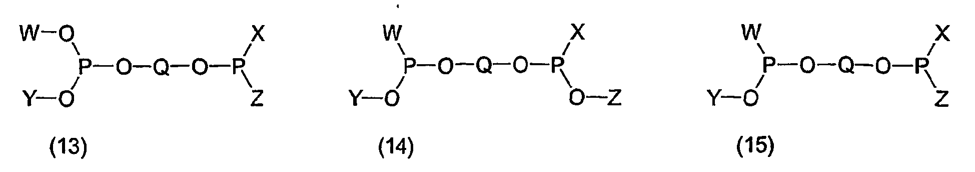 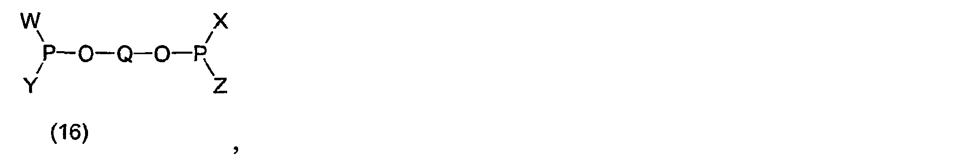 mit W, X, Y und Z gleich substituierte oder unsubstituierte, aliphatische, alicyclische, aliphatisch-alicyclische, heterocyclische, aliphatisch-heterocyclische, aromatisch-aromatische oder aliphatisch-aromatische Kohlenwasserstoffreste mit 1-50 Kohlenstoffatomen, wobei W, X, Y und Z gleich oder unterschiedlich oder kovalent miteinander verknüpft sind, und mit Q gleich ein zumindest zweiwertiger, substituierter oder unsubstituierter aliphatischer, alicyclischer, aliphatisch-alicyclischer, heterocyclischer, aliphatisch-heterocyclischer, aromatischer, aromatisch-aromatischer oder aliphatisch-aromatischer Kohlenwasserstoffrest, hergestellt werden. Die substituierten Kohlenwasserstoffreste können einen oder mehrere Substituenten, ausgewählt aus primäre, sekundären oder tertiären Alkylgruppen, alicyclischen Gruppen, aromatischen Gruppen, -N(R⁵)₂, -NHR⁵, -NH₂, Fluor, Chlor, Brom, Jod, -CN, -C(O)-R⁵, -C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, aufweisen. Sind mehrere Kohlenwasserstoffreste R⁵ vorhanden, so können diese gleich oder unterschiedlich sein. Die Substituenten sind vorzugsweise beschränkt auf solche, die keinen Einfluss auf die Reaktion selbst haben. Besonders bevorzugte Substituenten können ausgewählt sein aus den Halogenen, wie z.B. Chlor, Brom oder Jod, den Alkylresten, wie z.B. Methyl, Ethyl, Propyl, iso-Propyl, Butyl, sec.-Butyl, t-Butyl, neo-Pentyl, sec-Amyl, t-Amyl, iso-Octyl, t-Octyl, 2-Ethylhexyl, iso-Nonyl, iso-Decyl oder Octadecyl, den Arylresten, wie z.B. Phenyl, Naphthyl oder Anthracyl, den Alkylarylresten, wie z.B. Tolyl, Xylyl, Dimethylphenyl, Diethylphenyl, Trimethylphenyl, Triethylphenyl oder p-Alkylphenyl, den Aralkylresten, wie z.B. Benzyl oder Phenylethyl, den alicyclischen Resten, wie z.B. Cyclopentyl, Cyclohexyl, Cyclooctyl, Cyclohexylethyl oder 1-Methylcyclohexyl, den Alkoxyresten, wie z.B. Methoxy, Ethoxy, Propoxy, Butoxy oder Pentoxy, den Aryloxyresten, wie z.B. Phenoxy oder Naphthoxy, -OC(O)R⁵ oder -C(O)R⁵, wie z.B. Acetyl, Propionyl, Trimethylacetoxy, TriEthylacetoxy oder Triphenylacetoxy, und den drei Kohlenwasserstoffreste aufweisenden Silykesten (-Si(Hydrocarbyl)₃, wie z.B. Trimethylsilyl, Triethylsilyl oder Triphenylsilyl.

Das erfindungsgemäße Verfahren erlaubt insbesondere die Herstellung von Dihalogenphosphiten 1, Monohalogenphosphiten 2 oder Triorganophosphiten **3** und **3a** durch Kondensation von Dihalogenphosphiten **1,** Monohalogenphosphiten **2** und Phosphortrihalogeniden mit ein- oder mehrfach OH-substituierten, also OH-Gruppen aufweisenden organischen Verbindungen. 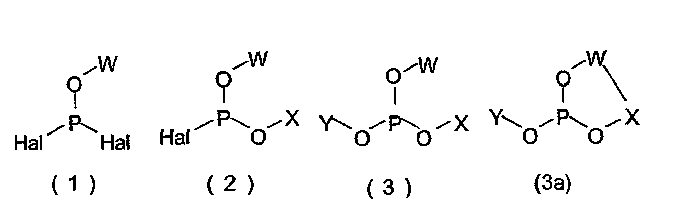 W, X und Y haben dabei die oben angegebene Bedeutung. Vorzugsweise bedeuten W, X und Y aliphatische, alicyclische, aliphatisch-alicyclische, heterocyclische, aliphatisch-heterocyclische, aromatisch-aromatische, aliphatisch-aromatische Kohlenwasserstoffreste mit 2 bis 25 Kohlenstoffatomen. X, Y und W können gleich oder unterschiedlich oder kovalent miteinander verknüpft sein, wie beispielsweise in Struktur **3a.**

Mittels des erfindungsgemäßen Verfahrens gelingt auch die Herstellung von Halogendiorganophosphoniten **4,** Triorganophosphoniten **5, 5a** oder **5b,** in dem die Kondensation von Dihalogenorganophosphoniten **6** oder Halogendiorganophosphoniten 4 bzw. 7 mit ein- oder mehrfach OH-substituierten organischen Verbindungen in Gegenwart basischer Ionentauscherharze durchgeführt wird W, X und Y haben dabei die weiter oben genannte Bedeutung.

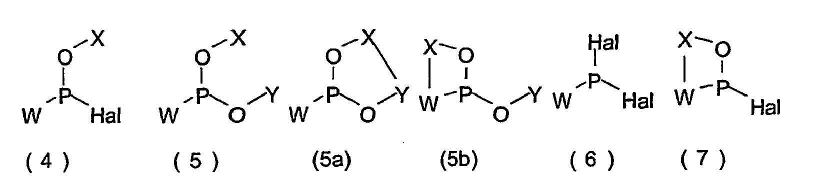

In einer weiteren Verfahrensvariante können mit dem erfindungsgemäßen Verfahren Triorganophosphinite **8** durch Kondensation von Halogenorganophosphiniten **9** mit ein- oder mehrfach OH-substituierten organischen Verbindungen in Gegenwart basischer Ionentauscherharze hergestellt werden.

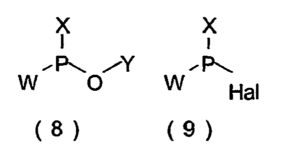

Durch das erfindungsgemäße Verfahren können auch Bisphosphite der Struktur **10, 10a** oder **10b** durch Kondensation von zwei- oder mehrfach OH-substituierten Kohlenwasserstoffen mit Diorganohalogenphosphiten **2** in Gegenwart eines oder mehrerer basischer Ionentauscherharze hergestellt werden.

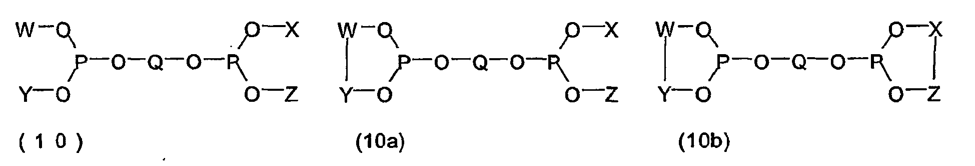

Mittels des erfindungsgemäßen Verfahrens können in einer weiteren Ausführungsvariante Diphosphor-Verbindungen des Phosphit-Phosphonit-Typs **12** durch Kondensation von zwei- oder mehrfach OH-substituierten Kohlenwasserstoffen mit Diorganohalogenphosphiten **2** und Halogendiorganophosphoniten 4 in Gegenwart von einem oder mehreren basischer Ionentauscherharze hergestellt werden.

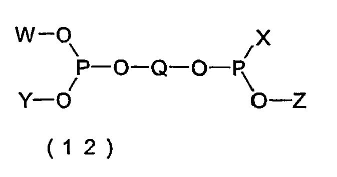

Mittels des erfindungsgemäßen Verfahrens können in einer weiteren Ausführungsvariante Diphosphor-Verbindungen des Phosphit-Phosphinit-Typs **13** durch Kondensation von zwei- oder mehrfach OH-substituierten Kohlenwasserstoffen mit Halogenphosphiniten **9** und Diorganohalogenphosphiten **2** in Gegenwart von einem oder mehreren basischen Ionentauscherharzen hergestellt werden.

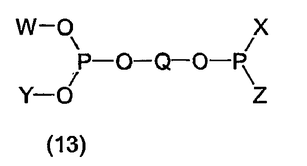

Mittels des erfindungsgemäßen Verfahrens können in einer weiteren Ausfuhrungsvariante Diphosphonit-Verbindungen **14** durch Kondensation von zwei- oder mehrfach OH-substituierten Kohlenwasserstoffen mit Halogendiorganophosphoniten **4** in Gegenwart eines oder mehrerer basischer Ionentauscherharze hergestellt werden.

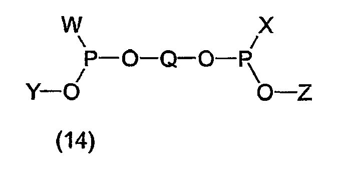

Mittels des erfindungsgemäßen Verfahrens können in einer weiteren Ausführungsvariante Verbindungen des Phosphonit-Phosphinit-Typs **15** durch Kondensation von zwei- oder mehrfach OH-substituierten Kohlenwasserstoffen mit Halogendiorganophosphoniten **4** und Halogenorganophosphiniten **9** in Gegenwart eines oder mehrerer basischer Ionentauscherharze hergestellt werden.

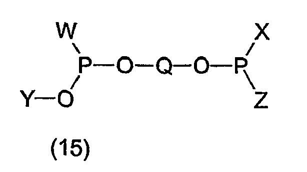

Mittels des erfindungsgemäßen Verfahrens können in einer weiteren Ausführungsvariante Diphosphinit-Verbindungen **16** durch Kondensation von zwei- oder mehrfach OH-substituierten Kohlenwasserstoffen mit Halogenorganophosphiniten **9** in Gegenwart eines oder mehrerer basischer Ionentauscherharze hergestellt werden.

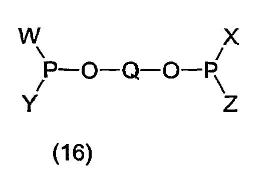

In den Formeln **10** bis **16** können Q, W, X, Y und/oder Z die oben angegebene Bedeutung haben. Insbesondere bedeutet Q bivalente Kohlenwasserstoffreste, die aliphatisch, alicyclisch, aliphatisch-alicyclisch, heterocyclisch, aliphatisch-heterocyclisch, aromatisch, aromatischaromatisch oder aliphatisch-aromatisch sein können und substituiert oder unsubstituiert sein können und W, X, Y und Z bedeuten aliphatische, alicyclische, aliphatisch-alicyclische, heterocyclische, aliphatisch-heterocyclische, aromatisch-aromatische, aliphatisch-aromatische Kohlenwasserstoffreste mit 2 bis 25 Kohlenstoffatomen, die unsubstituiert oder substituiert sein können, wobei X, Y, W und Z können gleich oder unterschiedlich oder kovalent miteinander verknüpft sein, wie beispielhaft in **Formel 10a** oder **10b** gezeigt wird.

Die Herstellung asymmetrischer Organophosphite und asymmetrischer Phosphonite gelingt nach K. Sasse in "Methoden der Organischen Chemie" (Houben-Weyl), Band XII/2, Kapitel 1, S. 62 ff., Thieme Verlag, Stuttgart (1964) und G. M. Kosolapoff, "Organophosphorus Compounds", chap. 7, XV, pp. 139, John Wiley, New York (1950) und den darin enthaltenen Literaturverweisen durch schrittweise Umsetzung der als Ausgangssubstanzen eingesetzten Organophosphorhalogenide bzw. Phosphorhalogenide mit Hydroxy-Gruppen enthaltenden Verbindungen in Gegenwart von Aminen. Je nach der gewünschten Zielverbindung kann das erfindungsgemäße Verfahren einen oder mehrere Reaktionsschritte beinhalten, wobei die Umsetzung jeweils einer zumindest eine Phosphor-Halogen-Bindung aufweisende Verbindung mit einer zumindest eine Hydroxy-Gruppe aufweisenden Verbindung ein Reaktionsschritt ist. Entsprechend kann das erfindungsgemäße Verfahren als Mehrstufenprozess zur Herstellung asymmetrischer Organophosphite und asymmetrischer Phosphonite ausgeführt werden, wobei die Reaktionsschritte jeweils in Gegenwart eines (schwach) basischen Ionenaustauschers durchgeführt wird.

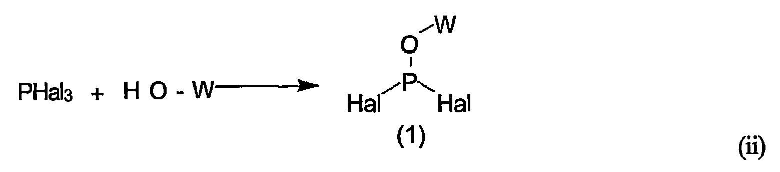

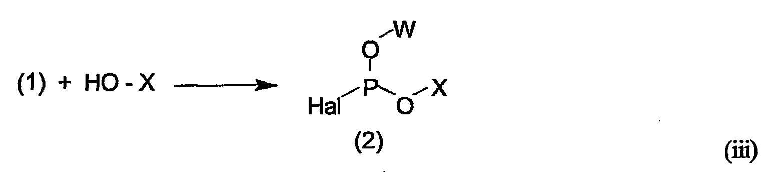

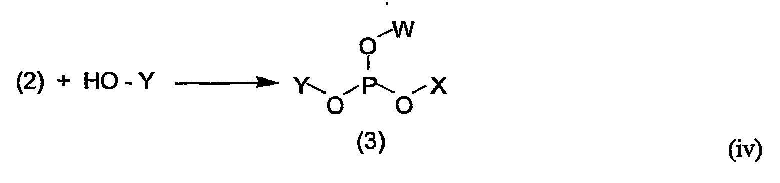

Wie in den Formeln **ii**, **iii** und **iv** illustriert, kann, ausgehend von einem Phosphortrihalogenid, durch Umsetzung mit einem Äquivalent einer eine Hydroxy-Gruppe enthaltenden Verbindung HO-W ein Organophosphordihalogenid, durch Umsetzung des Organophosphordihalogenids mit einem weiteren Äquivalent einer eine Hydroxy-Gruppen enthaltenden Verbindung HO-X ein Diorganophosphorhalogenid und durch weitere Umsetzung mit einem Äquivalent einer eine Hydroxy-Gruppe enthalten Verbindung HO-Y schließlich ein asymmetrisches Triorganophosphit hergestellt werden. Bei der Herstellung asymmetrischer Phosphonite kann eine analoge Vorgehensweise gemäss den Formeln **v** und **vi** angewendet werden.

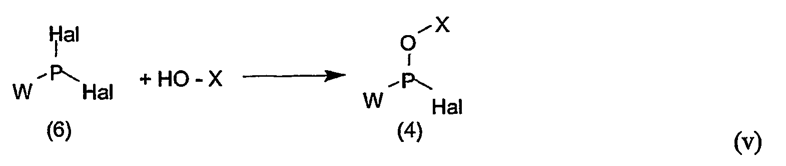

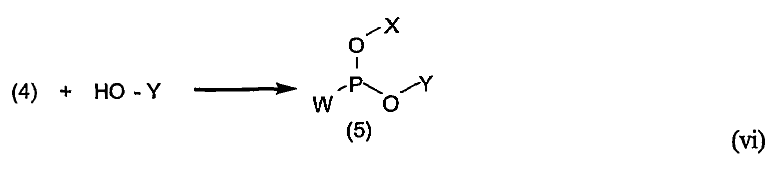

In den nachfolgenden Formeln **vii** und **viii** wird die erfindungsgemäße schrittweise Herstellung einer Diphosphor-Verbindung am Beispiel eines Bisphosphits **10** gezeigt. Eine Dihydroxy-Verbindung **22** wird mit einem Äquivalent eines Halogendiorganophosphits **2** zur Verbindung **23** umgesetzt, die schließlich mit einem weiteren Äquivalent eines Halogendiorganophosphits zum Bisphosphit **10** umgesetzt wird Die genannten Halogendiorganophosphite können gleich oder verschieden sein, so dass symmetrische oder asymmetrische Bisphosphite erhalten werden.

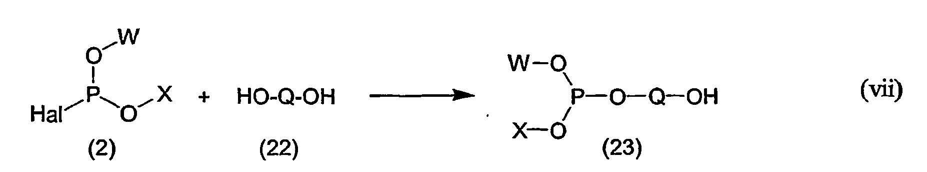

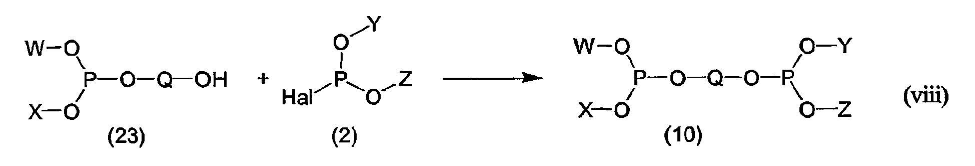

In den Formeln **ii** bis viii haben W, X, Y, Z und Q die bereits weiter oben genannten Bedeutungen.

Gemäss den Formeln vii und **viii** können Dihydroxy-Verbindungen **22** mit Diorganophosphiten **2,** Halogendiorganophosphoniten **4** bzw. **7,** Halogenorganophosphiniten **9** umgesetzt werden. In zwei Reaktionsschritten können asymmetrische Diphosphor-Verbindungen hergestellt werden wie, Bisphosphite **10,** Phosphit-Phosphonit-Verbindungen **12,** Phosphit-Phosphinit-Verbindungen **13,** Bisphosphonite **14,** Phosphonit-Phosphinit-Verbindungen **15** und Bisphosphinite **16.** Bei gleichen Organophosphorhalogeniden kann die Herstellung der symmetrischen Diphosphor-Verbindungen selbstverständlich in einem Verfahrensschritt erfolgen. Wenn die Reaktivitäten zweier Organophosphorhalogenide gegenüber Dihydroxy-Verbindungen **22** hinreichend verschieden ist, kann die Herstellung asymmetrischer Diphosphor-Verbindungen ebenfalls in einem Verfahrensschritt durchgeführt werden. Andernfalls muss für jeden Reaktionsschritt ein Verfahrensschritt vorgesehen werden.

Analog zu den Reaktionen **vii** und **viii** können auch Verbindungen, die mehr als zwei Phosphor-Einheiten tragen hergestellt werden, indem Verbindungen, die drei oder mehr Hydroxy-Gruppen aufweisen, schrittweise mit Organophosphorhalogeniden umgesetzt werden.

Wenn eine Verbindung, die noch eine oder mehrere Hydroxy-Gruppen beinhaltet, z.B. eine Verbindung der Struktur **23,** Ziel der Herstellung ist, kann die Reaktionssequenz auf dieser Stufe abgebrochen werden. Eine vollständige Umsetzung der Hydroxy-Gruppen ist nicht notwendig.

Die in Reaktionsschemata **ii** bis **viii** illustrierten Reaktionsschritte können diskontinuierlich durchgeführt werden. Dabei wird eine Kupplungskomponente zusammen mit einem oder mehreren Ionentauscherharzen vorgelegt und anschließend die zweite Kupplungskomponente zudosiert. Über den Zulauf der Komponenten oder durch Zulauf von Lösemittel kann ggf. die Wärmeproduklionsrate bzw. die Temperatur in der Reaktionsmischung geregelt werden. Bei der diskontinuierlichen Fahrweise ist es für eine möglichst hohe Ausbeute an Wunschprodukt wichtig, die richtige Kupplungskomponente vorzulegen, bzw. zuzudosieren. Beispielsweise wird bei der gezielten Herstellung von asymmetrischen Organophosphor-Verbindungen der Formeln **1, 2, 3, 3a, 4, 5, 5a, 5b** oder **8** gemäss der Schemata **ii** bis **vi** bevorzugt die Phosphorverbindung, also das Phosphorhalogenid bzw. das Organophosphorhalogenid zusammen mit einem oder mehreren basischen Ionentauscherharzen vorgelegt und anschließend die OH-Gruppe aufweisende Verbindung (Hydroxy-Komponente) zudosiert. Bei der gezielten Herstellung asymmetrischer Diphosphor-Verbindungen gemäss der Schemata **vii** und **viii** wird bevorzugt die OH-Gruppen aufweisende Komponente zusammen mit einem oder mehreren Ionentauscherharzen vorgelegt und anschließend das Organophosphorhalogenid zudosiert.

Nach jedem Verfahrensschritt aber auch nach jedem Reaktionsschritt kann das Rohprodukt aufgearbeitet und im nächsten Reaktionsschritt weiter umgesetzt werden. Es kann aber auch vorteilhafter sein, nach der vollständigen Umsetzung einer Kupplungskomponente die nächste Komponente direkt zuzugeben und auf die Aufarbeitung zwischen beiden Reaktionsschritten zu verzichten. Im Sinne der vorliegenden Erfindung soll unter der Umsetzung jeweils einer zumindest eine Phosphor-Halogen-Bindung aufweisende Verbindung mit einer zumindest eine Hydroxy-Gruppe aufweisenden Verbindung ein Reaktionsschritt verstanden werden.

Die Reaktionszeit in den einzelnen Reaktionsschritten kann gleich oder verschieden sein, in jedem Fall aber hinreichend lang, um den gewünschten Umsatz zu erzielen. Die Reaktionstemperaturen in den einzelnen Reaktionsschritten können gleich oder unterschiedlich sein. Der oder die in den einzelnen Reaktionsschritten eingesetzten basischen Ionentauscherharze können gleich oder unterschiedlich sein.

Als Reaktoren für eine diskontinuierliche Reaktionsführung können Rührkessel verwendet werden. Der bzw. die basischen Ionentauscherharze können dabei z.B. als frei bewegliche Perlen in der Reaktionsmischung eingesetzt werden. Es ist auch möglich den oder die Ionentauscherharze in Form von durch den Konvektionsstrom der Rührers angeströmten Packungen zusammenzufassen. Ein Einsatz von sogenannten "spinning basket"-Rührern ist ebenfalls möglich. Daneben können als Reaktorsysteme Rohrreaktoren mit vollständiger Rückführung (Schlaufenreaktoren) eingesetzt werden. Die Ionentauscherharz-Schüttung kann dabei von oben oder unten angeströmt werden.

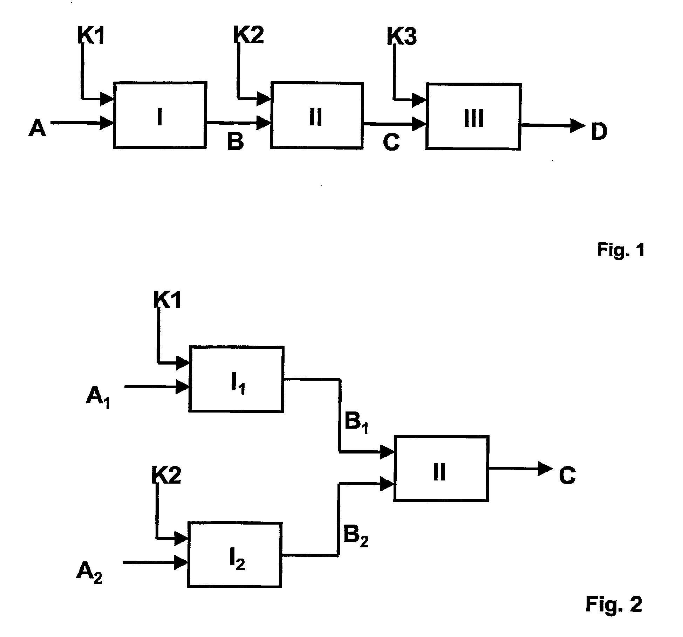

Die in Schemata **ii** bis **viii** dargestellten Reaktionsschritte können in einer anderen bevorzugten Ausführungsart des erfindungsgemäßen Verfahrens auch kontinuierlich in hintereinander geschalteten Reaktionsräumen durchgeführt werden. Eine solche Reaktorsequenz ist in Fig. 1 illustriert: Das Edukt A und eine erste Kupplungskomponente **K1** werden in eine erste Reaktionsstufe **I** geführt. Der Austrag der ersten Reaktionsstufe **B** wird anschließend, wie auch eine zweite Kupplungskomponente **K2,** in eine zweite Reaktionsstufe **II** geführt usw. Es ist dabei auch möglich, dass die genannten Kupplungskomponenten **K** Austräge eines kontinuierlichen oder mehrerer kontinuierlicher, ggf. hintereinander geschalteter Reaktoren sind, also Reak-torsequenzen der in Fig. 2 skizzierten Art parallel und konvergierend verschaltet sind.

Um bei der Herstellung asymmetrischer Produkts eine möglichst hohe Ausbeute an Wunschprodukt zu erzielen, ist in jeder Stufe das Konzentrationsverhältnis der Reaktanden durch die Verhältnisse der jeweiligen Zuläufe entsprechend einzustellen. Typischerweise werden äquimolare oder annähernd äquimolare Mengen eingestellt.
Die Verweilzeit der Reaktanden in den einzelnen Reaktionsschritten kann auch bei der kontinuierlichen Fahrweise gleich oder verschieden sein, in jedem Fall muss sie aber aber hinreichend sein, um den gewünschten Umsatz in der jeweiligen Stufe zu erzielen. Der oder die in den einzelnen Reaktionsschritten eingesetzten basischen Ionentauscherharze können gleich oder unterschiedlich sein.

Als Reaktoren für eine kontinuierliche Reaktionsführung können kontinuierlich betriebene Rührkessel eingesetzt werden. Der bzw. die basischen Ionentauscherharze können dabei als frei bewegliche Perlen in der Reaktionsmischung eingesetzt werden. Es ist auch möglich den oder die Ionentauscherharze in Form von durch den Konvektionsstrom der Rührers angeströmten Packungen zusammenzufassen. Ein Einsatz von sogenannten "spinning basket"-Rührern ist ebenfalls möglich. Daneben können Rohrreaktoren eingesetzt werden. Die Ionentauscherharz-Schüttung kann dabei von oben oder unten angeströmt werden. Bei den kontinuierlich betriebenen Reaktoren kann eine teilweise Rückführung der Reaktoraustrage vorteilhaft sein. Bei der Anordnung von kontinuierlichen Reaktoren in einer Reaktorskaskade kann der rückgeführte Anteil des Austrages einer Reaktionsstufe teilweise oder vollständig in dieselbe Stufe zurückgeführt, teilweise oder vollständig an der Anfang der vorhergehenden Stufe oder teilweise oder vollständig an den Anfang der ersten Stufe des ersten Reaktors der Reaktorkaskade geführt werden.

Ganz allgemein können unabhängig davon, ob das Verfahren kontinuierlich oder diskontinuierlich durchgeführt wird, bei der Durchführung mehrere Reaktionsschritte in den Reaktionsschritten gleiche oder unterschiedliche Ionenaustauscher eingesetzt werden. Ebenso können bei der Durchführung mehrerer Reaktionsschritte in den Reaktionsschritten gleiche oder unterschiedliche Reaktionsbedingungen, insbesondere Temperaturen eingestellt werden. Die in den Reaktionsstufen gewählten Temperaturen hängen im wesentlichen von der Reaktivität der Einsatzstoffe ab und können innerhalb einer Folge von Reaktoren gleich oder unterschiedlich sein. Bevorzugt wird die Temperatur innerhalb einer Reaktorkaskade gesteigert. Die Reaktionstemperaturen betragen vorzugsweise von -50°C bis 150°C, bevorzugt von -10°C bis 120°C und besonders bevorzugt von 20°C bis 100°C. Wie bereits beschrieben kann die Regelung der Temperatur durch die Zuflussregelung der Komponenten erfolgen. Ebenso ist es möglich die Temperatur durch die Verwendung von heiz-/kühlbaren Reaktoren auf einer bestimmten Temperatur zu halten. Auch die Kombination beider Maßnahmen zur Temperaturregulierung ist möglich. Auf diese Weise ist eine quasi isotherme Betriebsführung des gesamten Verfahrens oder einzelner Verfahrens- oder Reaktionsschritte möglich, wodurch eine besonders exakte Einstellung auf die optimale Reaktionstemperatur möglich ist, welches zu besseren Ausbeuten führen kann.

Das erfindungsgemäße Verfahren wird vorzugsweise in Gegenwart eines Lösemittels oder mehrerer Lösemittel durchgeführt. Die Wahl des Lösemittels hängt von der Löslichkeit der Einsatzstoffe ab. Darüber hinaus muss das Lösemittel unter den Reaktionsbedingungen weitgehend inert gegenüber den Einsatzstoffen sein. Das Lösemittel kann auch zur Temperaturregelung in das Reaktionsgemisch gegeben werden. Bevorzugt werden Lösemittel eingesetzt, die als Protonenträger fungieren können.

Bevorzugte Lösemittel sind beispielsweise Aromaten wie Benzol, Chlorbenzol, Toluol oder Xylole, offenkettige oder cyclische Alkane wie Pentan, n-Hexan, n-Heptan, Cyclohexan oder Methylcyclohexan, offenkettige oder cyclische Ether wie Diethylether, Di-iso-Propylether, Methyl-tert-Butylether, Anisol, Tetrahydrofuran, 1,4-Dioxan, 1,3-Dioxolan, Ester wie Ethylacetat, Isobutylacetat, tert-Butylacetat, cyclische Kohlensäureester wie Ethylencarbonat, Propylencarbonat und 1,2-Butylencarbonat, Ketone wie Aceton, 2-Butanon, 3,3-Dimethyl-2-butanon, aromatische und aliphatische Nitrile wie Benzonitril, Proprionitril und Acetonitril, Lactone, Pyrrolidone, z.B. N-Methylpyrrolidon, Formamide, z.B. Dimethylformamid, Sulfoxide, z.B. Dimethylsulfoxid sowie N-Alkyl-Morpholine und Sulfolan. Es ist selbstverständlich auch möglich, Gemische dieser Lösemittel einzusetzen.

In einer besonders bevorzugten Ausführungsart des erfindungsgemäßen Verfahrens wird das Verfahren in Gegenwart eines Protonenüberträgers durchgeführt wird, der vorzugsweise homogen in der Reaktionsmischung oder Reaktionslösung vorhanden ist. Als Protonenüberträger können Basen, insbesondere Amine eingesetzt werden, die schwächere Basen als die schwach basischen Ionenaustauscher sind. Bevorzugt werden als Protonenüberträger solche Verbindungen eingesetzt, die neben der Funktion als Protonenüberträger auch die Funktion des Lösungsmittels übernehmen können. Solche Verbindungen können z.B. N-Methylpyrrolidon oder Methylimidazol sein. Durch die Verwendung eines Protonenüberträgers, der homogen in der Reaktionsmischung verteilt ist, kann die Reaktionsgeschwindigkeit erhöht werden, da zur Unterstützung der Reaktion die Reaktanden nicht mehr direkt mit dem Ionenaustauscher in Kontakt kommen müssen, sondern nur mit der schwächeren Base, die aber homogen verteilt in der Reaktionsmischung vorliegt. Vorzugsweise liegt in der Reaktionsmischung ein molares Verhältnis von Protonenüberträger zu durch den Ionenaustauscher bereitgestellter freier Base von 0,0001 zu 1 bis 1 zu 1, bevorzugt von 0,001 bis 0,01 vor.

Das erfindungsgemäße Verfahren wird in Gegenwart von polymeren, schwach basischen Ionenaustauscherharzen auf Basis von Styrol-Divinylbenzol-Copolymeren, die N,N-DialkylAmin-Gruppen tragen, die in der Form des freien Amins vorliegen, durchgeführt, um den bei der Kondensation von Phosphortrihalogeniden oder Organophosphorhalogeniden mit organischen, Hydroxy-Gruppen tragenden Verbindungen entstehenden Halogenwasserstoff abzufangen. Besonders bevorzugt werden Ionentauscherharze auf Basis von Styrol-Divinylbenzol-Copolymeren, die N,N-Dimethylamino-Gruppen tragen, eingesetzt. Es können macroreticulare Ionentauscherharze oder solche vom Gel-Typ verwendet werden. Macroreticulare Ionentauscherharze sind besonders bevorzugt.

Gut geeignet für den Einsatz im erfindungsgemässen Verfahren sind kommerziell erhältliche schwach basische Ionentauscherharze, beispielsweise Lewatit MP62, DOWEX M-43 oder Amberlyst A21.

Vorzugsweise wird der Ionenaustauscher in Form von Partikeln, bevorzugt mit einer mittleren Partikelgröße von 10 µm bis 2 mm, besonders bevorzugt von 0,1 bis 1,5 mm oder in Form einer festen Packung eingesetzt.

In dem erfindungsgemäßen Verfahren wird zumindest soviel schwach basischer Ionenaustauscher eingesetzt, dass für jedes Mol Säure, welches bei der oder den Verbindungsbildung/-en abgespalten wird, zumindest ein Mol freier Base am Ionentauscher zur Verfügung steht. Vorzugsweise wird soviel Ionenaustauscher eingesetzt, dass das Verhältnis von Molen durch die Abspaltung entstehender Säure zu Molen vom Ionenaustauscher zur Verfügung gestellter freier Base von 1 zu 1 bis 3 zu 1, vorzugsweise von 1,1 zu 1 bis 2 zu 1.

Das Ionentauscherharz wird vorzugsweise vor dem Einsatz im erfindungsgemäßen Verfahren mit bekannten Techniken getrocknet. Beispielsweise durch Wärmebehandlung im Vakuum (G. Mohorcic, M. Pregelj, M. Pirs, Ion Exchange and Membranes (1975), 2(2), 107 - 110, C. Buttersack, K. Struss, H. Widdecke, J. Klein, Reactive Polymers, Ion Exchangers, Sorbents (1987), 5(2), 171 - 180) oder durch azeotrope Destillation mit geeigneten Schleppmitteln (GB 1120402).

Zur Durchführung des Verfahrens in kontinuierlicher bzw. quasi kontinuierlicher Fahrweise werden pro Reaktions- bzw. Verfahrensschritt zumindest zwei parallel geschaltete Reaktoren vorgesehen, die so verschaltet sind, dass wenn in einem der Reaktoren der Ionenaustauscher gewechselt, regeneriert oder getrocknet wird die Reaktion in dem anderen Reactor fortgesetzt werden kann.

Um die Kosten des Verfahrens gering zu halten, ist es zweckmäßig, das mit Halogenwasserstoff beladene Ionenaustauscherharz zu regenerieren (in die basische Form zu bringen) und wiederzuverwenden. Schwach basische Ionentauscher werden mit üblicherweise NH₄OH, Na₂CO₃ oder NaOH regeneriert. Genaue Instruktionen hierzu liefern Technische Informationsblätter des Herstellers (z.B. Lewatit-Selective ion exchangers, Instructions for laboratory trials with Lewatit selective ion exchange resins, Technical Information, Bayer; Dow Liquid Separations, Dowex Marathon WBA, Ion Exchange Resin, Engeneering Information, The Dow Chemical Company; Dowex Ion Exchange Resins, Properties, Impurities and Concentrations of Regenerant Chemicals).

Weitere Informationen zur Regeneration von Ionentauschern finden sich z. B. in: Regeneration of Anion Exchange Resins with Regular-Grade Diaphragm-Cell Caustic Soda: A Five-Year Plant Trial (IWC Proceedings, 10(88, S.D. Coker, M.P. Murphy); Petrochemical Company Anion Exchange Resin Regeneration Trial (Dow Report, 8/89, Michael A. Smith) und Caustic Soda for Ion Exchange Resin Regeneration (Marketing Research Report, 4/86, Ralph A. Bacon).

Die vorliegende Erfindung wird an Hand der Figuren Fig. 1 und Fig. 2 näher erläutert, ohne dass die Erfindung, deren Anwendungsbreite sich aus der Beschreibung und den Patentansprüchen ergibt, auf diese Ausführungsformen beschränkt sein soll.

In Fig. 1 ist eine mögliche Verschaltung von Reaktoren für eine kontinuierliche Fahrweise dargestellt. Das Verfahren gemäß Fig. 1 weist drei Reaktionsschritte auf Im ersten Schritt wird ein Edukt **A,** z.B. ein Phosphortrichlorid, in einen Reaktor **I,** der einen Ionenaustauscher aufweist, eingespeist. In diesen Reaktor wird ebenfalls Komponente **K1,** welche eine erste, eine OH-Gruppe aufweisende Verbindung ist, zudosiert. Die Menge der Komponente **K1** ist dabei vorzugsweise so bemessen, dass ein molares Verhältnis von **A** zu **K1** von 3 zu 1 vorliegt. Das als Produkt **B** des ersten Reaktionsschrittes **I** erhaltene Monoorganophosphordichlorid wird in den Reaktor **II** des nächsten Reaktionsschrittes überführt, der ebenfalls einen Ionenaustauscher aufweist. In diesen Reaktor wird außerdem die Komponente **K2,** welche eine zweite eine OH-Gruppe aufweisende Verbindung ist, zudosiert. Die Menge der Komponente **K2** ist dabei vorzugsweise wiederum so bemessen, dass ein molares Verhältnis von **B** zu **K2** von 2 zu 1 bei Eintritt in den Reaktor vorliegt. Das als Produkt **C** des zweiten Reaktionsschrittes **II** erhaltene Diorganophosphorchlorid wird in den Reaktor **III** des nächsten Reaktionsschrittes überführt, der ebenfalls einen Ionenaustauscher aufweist. In diesen Reaktor wird außerdem die Komponente **K3,** welche eine dritte eine OH-Gruppe aufweisende Verbindung ist, zudosiert. Die Menge der Komponente **K3** ist dabei vorzugsweise so bemessen, dass ein molares Verhältnis von **C** zu **K3** von 1 zu 1 bei Eintritt in den Reaktor vorliegt. Als Produkt **D** aus Reaktor **III** wird im vorliegenden Fall ein Phosphit erhalten.

In Fig. 2 ist eine andere mögliche Verschaltung von Reaktoren in denen eine Verfahrensvariante des erfindungsgemäßen Verfahrens, welche mehrere Reaktionsschritte aufweist, kontinuierlich durchgeführt werden kann, dargestellt. So kann in Reaktor **I₁,** der einen Ionenaustauscher aufweist, als Edukt **A₁** z.B. ein Halogendiorganophosphit gemäß Formel **2** zusammen mit der Komponente **K1,** z.B. eine Dihydroxy-Verbindung gemäß Formel **22** im Verhältnis von 1 zu 1 eingespeist werden. Als Reaktionsprodukt **B₁** wird ein Produkt gemäß Formel **23** erhalten. In Reaktor **I₂,** der ebenfalls einen Ionenaustauscher aufweist, wird als Edukt **A₂** z.B. ein Dihalogenorganophosphit gemäß Formel **1** zusammen mit der Komponente **K2,** z.B. einer eine OH-Gruppe aufweisenden Alkylverbindung im Verhältnis von 1 zu 1 eingespeist. Als Reaktionsprodukt **B₂** wird ein Produkt gemäß Formel **2** erhalten. Die Produkte **B₁** und **B₂** werden gemeinsam, vorzugsweise im molaren Verhältnis von 1 zu 1 in den Reaktor **II,** der ebenfalls einen Ionenaustauscher aufweist, gefahren. In diesem Reaktor reagieren die Produkte **B₁** und **B₂** unter Halogenwasserstoff-Abspaltung zu Produkt **C** gemäß Formel **10.**

Die folgenden Beispiele sollen ausschließlich der Erläuterung der Erfindung dienen, nicht jedoch ihre Anwendungsbreite einschränken, die sich ausschließlich aus der Beschreibung und den Patentansprüchen ergibt.

### Beispiele:

Alle Präparationen wurden mit Standard-Schlenk-Technik unter Schutzgas durchgeführt. Die Lösungsmittel wurden vor Gebrauch über geeigneten Trocknungsmitteln getrocknet. Der eingesetzte Ionentauscher Lewatit MP-62 wurde zur Entfernung von Wasser in Hexan suspendiert und das Wasser azeotrop in einer Dean-Stark-Apparatur ausgetragen.

### Beispiel 1: Phosphit gemäß Formel I, hergestellt aus 2,2'-Bis (3,5-ditert.-butyl)-phenol und Phosphortrichlorid

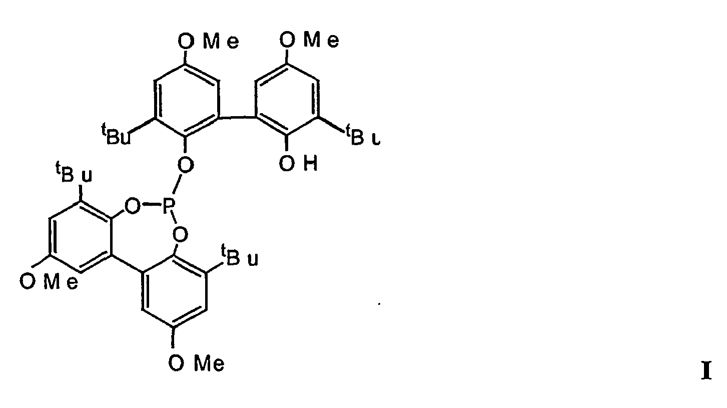

### Beispiel 1.1: erfindungsgemäß

Zu einer Mischung aus 26,5 g (0,045 mol eq.) Ionenaustauscher Lewatit MP-62 und 1,3 ml (2 g; 0,015 mol) Phosphortrichlorid in 200 ml Toluol wird unter kräftigem Rühren bei Raumtemperatur eine Lösung von 12,3 g (0,03 mol) 2,2'-Bis(6-tert.-butyl-1-hydroxy-4-methoxyphenyl) in 100 ml Toluol zugetropft. Anschließend wurde die Reaktionsmischung 2 h auf 60°C erwärmt und über Nacht abgekühlt. Zur Aufarbeitung wurde der Ionenaustauscher mittels Glasfritte abfiltriert und 4 mal mit 50 ml Toluol nachgewaschen. Die Lösung wurde bei Raumtemperatur im Ölpumpenvakuum von flüchtigen Bestandteilen befreit und das Produkt im Vakuum getrocknet. Ausbeute: 11,8 g, entsprechend 93 % der Theorie.

### Beispiel 1.2: Stand der Technik gemäß EP 1 201 675

Zu einer Lösung von 2,42 g 2,2'-Bis(6-tert.-butyl-1-hydroxy-4-methoxyphenyl)(6,75 mmol) und 1,6 ml Pyridin in 22 ml THF tropft man bei 0°C eine Lösung von 0,93 g PCl₃ (6,75 mmol) in 10 ml THF. Nach 4 h Rühren bei 25°C wird das Lösungsmittel im Vakuum entfernt. Nach Zusatz von 40 ml Diethylether, Filtration und einengen im Vakuum werden 2,8 g (98%) an spektroskopisch reinem Chloro-phosphorigsäureester des 2,2'-Bis(6-tert.-butyl-1-hydroxy-4-methoxyphenyl) erhalten. 2,8 g dieses Chloroesters (6,62 mmol) in 20 ml THF gibt man bei Raumtemperatur zu einer bei -20°C erhaltenen Monolithiumphenolatlösung aus 2,37 g 2,2'-Bis(6-tert.-butyl-1-hydroxy-4-methoxyphenyl)(6,62 mmol) in 30 ml THF und 20,7 ml einer 0,32 M Hexanlösung von n-Butyllithium (6,62 mmol). Nach 24 h wird im Vakuum eingeengt. Zugabe von 40 ml Methylenchlorid, Filtration und Entfernen des Solvens im Vakuum ergeben 4,6 g (93 %) an hochviskosem Produkt.

### Einsatz von Triethylamin wie im Stand der Technik (EP 0 213 639) beschrieben.

Ca. 179,2 g (0,5 mol) 2,2'-Dihydroxy-3,3'-di-t-butyl-5,5'-dimethoxy-1,1'-biphenyl wird zu ca. 1600 ml Toluol gegeben. Ausreichend Toluol wurde dann azeotropisch entfernt, um Reste von Feuchtigkeit zu entfernen. Die Diol-Toluol-Lösung wurde dann auf 80°C abgekühlt und ca. 168,7 g (1,67 mol) Triethylamin wurden zugegeben. Ca. 68,7 g (0,5 mol) PCl₃ wurden zu 200 ml Toluol gegeben. Zu dieser Lösung wurde bei -10°C innerhalb von 1 h und 40 min tropfenweise die Diol-Toluol-Lösung hinzugefügt. Die Reaktionslösung wurde für weitere 30 min. bei dieser Temperatur gehalten. Anschließen wurde ein Aufwärmen der Lösung auf Raumtemperatur innerhalb von 2 h zugelassen. Anschließend wurde das Reaktionsgemisch zur Entfernung des Triethylaminhydrochlorid Niederschlags filtriert und der Niederschlag mit zwei mal 200 ml Toluol gewaschen. Das Filtrat und die Waschlauge wurden vereinigt zu 717,5 g Lösung des Phosphorochloridit-Zwischenproduktes in Toluol.

Ca. 170 g von weiterem 2,2'-Dihydroxy-3, 3'-di-t-butyl-5,5'-dimethoxy-1,1'-biphenyl wurde zu 800 ml Toluol gegeben. Anschließend wurden 48,1 g Triethylamin hinzugefügt. Die 717,5 g der oben genannten Phosphorochloridit-Toluol-Lösung wurde dieser Lösung innerhalb von 45 min bei Raumtemperatur zugefügt. Die Temperatur wurde auf 80°C für eine Stunde und 45 Minuten und dann auf 95°C für 2 Stunden erhöht. Anschließend ließ man auf Raumtemperatur abkühlen. Ca. 600 ml destilliertes Wasser wurden der Reaktionsmischung zugegeben um, das feste Triethylaminhydrochlorid zu lösen. Nachdem der Lösung Zeit gegeben wurde sich zu setzen, wurden die sich ausbildenden Phasen getrennt. Die wässrige Phase wurde mit zweimal 250 ml Toluol extrahiert. Die organische Phase und die Extrakte wurden vereinigt und über trockenem Magnesiumsulfat für eine Stunde getrocknet. Anschließend wurde die Lösung filtriert und im Vacuum aufkonzentriert zu einem festen Rückstand. Der Rückstand wurde aus Acetonitil rekristallisiert und es wurden 242,5 g (65,4 % der Theorie) des Diorganophosphits erhalten.

Wie an Hand des erfindungsgemäßen Beispiels zu erkennen ist, kann die gleiche Ausbeute wie nach dem Verfahren gemäß dem Stand der Technik erhalten werden, wobei die Verfahrensführung deutlich einfacher ist.

### Beispiel 2: Herstellung von 2,2'-Biphenyl-Phosphorsäurechlorid gemäß Formel II.

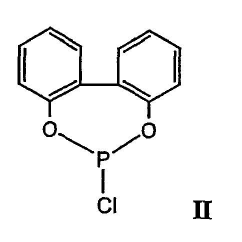

### Beispiel 2.1: erfindungsgemäß

Zu einem Gemisch von 35 g (0,06 mol) Ionenaustauscher Lewatit MP 62 und 4,13 g = 2,62 ml (0,03 mol) Phosphortrichlorid in 150 ml Toluol wurde bei Raumtemperatur unter kräftigem Rühren eine Lösung von 5,7 g (0,03 mol) 1,1'-Biphenyl-2,2'-diol in 50 ml Toluol tropfenweise hinzugegeben. Im Anschluss räumte man 2 Stunde Nachreaktionszeit ein. Zur Aufarbeitung wurde der Ionentauscher abfiltriert und 3 mal mit 50 ml getrocknetem Toluol nachgewaschen. Aus der erhaltenen Lösung wurde das Lösungsmittel im Vakuum entfernt. Die Ausbeute betrug 7,2 g, 96 % der Theorie. Die Reinheit betrug >95%.

### Stand der Technik

**In Phosphoric acid esters of 3,4-Dihydroxytoluene and of 2,2'-Dihydroxybiphenyl.** Anschutz, Ludwig; Marquardt, Wolfgang, Chem. Ber. 1956, 89, 1119-23 werden innerhalb von 70 min. tropfenweise 48 g PCl₃ zu 45,7 g 2,2'-Dihydroxybiphenyl in 45 ml Benzol gegeben. Die Mischung wird 5 Stunden unter Rückfluss und anschließend für 14 Stunden bei 20 °C gehalten. Es wurden 57% 2,2'-Biphenylen-Phosphorsäurechlorid erhalten.

### US 4,769,498:

Ca. 771,4 g PCl₃ wurden tropfenweise bei Raumtemperatur zu 281,1 g 1,1'-Biphenyl-2,2'-diol gegeben und die Mischung unter Rühren und Rückfluss langsam über zwei Stunden erhitzt (ca. 22° C bis ca. 83° C). Dem Reaktionsgemisch wurde dann erlaubt abzukühlen auf ca. 30 °C. Anschließend wurde das Gemisch bei einer Dampftemperatur von 145 °C destilliert, um überschüssiges PCl₃ zu entfernen. Ein Destillat von ca. 468 g wurde über Kopf abgenommen. Der verbleibende Rückstand wurde anschließend im Vakuum bei einem Druck von 0,5 mm Hg und einer Dampftemperatur von 137 bis 140 °C destilliert. 32,5 g einer gelben, viskosen Flüssigkeit wurden dabei über Kopf gesammelt. Die Vakuumdestillation wurde dann bei einer Dampftemperatur von 143 °C fortgesetzt und es wurden 270,8 g einer farblosen viscosen Flüssigkeit von 1,1'-Biphenyl-2,2'-diyl-phosphorochloridit über Kopf erhalten. Die Ausbeute beträgt in diesem Fall zwar 72. %, es muss aber mit einem 3,7-fachen Überschuss an PCl₃ gearbeitet werden.

In J. Mol. Catal. A: Chemical 2000, 164, 125-130 wird ein Schlenk-Rohr mit 14 mmol 2,2'-Biphenol, 35 ml Toluol und einem Rührer versehen und anschließend auf eine Temperatur von 0 °C gekühlt. Zu dieser Mischung wird eine Mischung von 15 mmol PCl₃, 15 ml Toluol und 5 ml Et₃N über eine Kanüle langsam zugegeben. Nach Rühren über Nacht bei Umgebungstemperatur wurde die Mischung mit einer Glasfritte filtriert. Der Rückstand wurde mit 50 ml Toluol gewaschen. Aus dem Filtrat wurde das Lösemittel und überschüssiges PCl₃ durch Verdampfen unter vermindertem Druck entfernt. Durch Destillation des Filtrats wurde reines Produkt mit einer Ausbeute von 90% erhalten.

Das erfindungsgemäße Verfahren hat den Vorteil, dass ein völlig aminfreies Produkt erhalten wird, welches bereits als Rohprodukt direkt weiter eingesetzt werden kann. Darüber hinaus ist die Ausbeute mit 96 % höher als bei den beiden anderen Verfahren.

### Beispiel 3: 2,2'-Bis[(1,1'-biphenyl-2,2'-diyl)phosphit]-3,3'-di-tert-butyl-5,5'-dimethoxy-1,1'-biphenyl gemäß Formel III

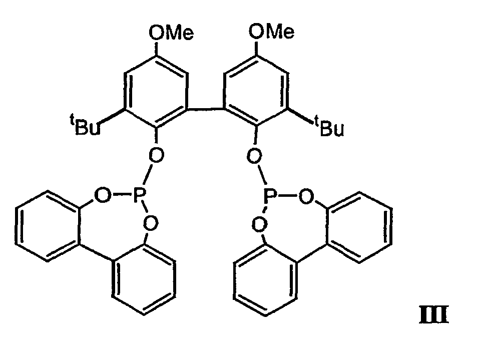

### Beispiel 3.1: erfindungsgemäß

Zu einer Mischung von 17,5 g (0,03 mol-Äquivalente) Ionenaustauscher Lewatit MP und 7,2 g (0,029 mol) 2,2'-Biphenylen-Phosphorchlorid in 100 ml Toluol wurde bei Raumtemperatur eine Suspension von 4,5 g (0,0125 mol) 3,3'-Ditert.-butyl-2,2'-dihydroxy-5,5'-dimethoxy-biphenyl in 100 ml Toluol langsam zugegeben. Anschließend wurde die Reaktionsmischung 2 h bei Raumtemperatur und 2 h bei 60°C gerührt. Zur Aufarbeitung wurde der Ionenaustauscher abfiltriert, Toluol im Vakuum entfernt und der erhaltene Rückstand aus Hexan umkristallisiert.
Die Ausbeute betrug 7,2 g (50 % der Theorie)

### Stand der Technik mit Triethylamin (WO 95/14659)

Zu einer Lösung von 1,1'-Biphenyl-2,2'-diyl-phosphorochloridit (1,40 g, 5,6 mmol) in 0,6 ml Toluol wurde bei -40°C innerhalb von 15 min. eine Lösung von 2,2'-Dihydroxy-3,3'-di-t-butyl-5,5'-dimethoxy-1,1'-biphenyl (1,00 g, 2,80 mmol) und Triethylamin (1,79 ml, 22,4 mmol) in 12 ml Toluol zugegeben. Der resultierenden Mischung wurde über Nacht langsam auf Raumtemperatur erwärmt. Nach Zugabe von 6,5 ml Wasser wurde die Reaktionsmischung filtriert. Der Rückstand wurde mehrmals mit Wasser gewaschen und anschließend im Vakuum über Nacht getrocknet. Es wurde ein weißer Feststoff erhalten, welcher aus Acetonitril umkristallisiert wurde. Es wurden 0,72 g eines weißen Pulvers erhalten. (33 % Ausbeute).

Es ist deutlich zu erkennen, dass durch die Verwendung eines basischen Ionenaustauschers eine höhere Ausbeute erzielt werden konnte. Bei dem erfindungsgemäßen Verfahren kann auf eine Kühlung der Reaktionsmischung bzw. eine Durchführung der Reaktion bei tiefen Temperaturen verzichtet werden, da die Reaktion moderater abläuft.

## Patentansprüche

1. Verfahren zur Herstellung von dreiwertigen Organophosphor-Verbindungen durch Kondensation von Phosphorverbindungen der Formel **i**
PHalₐR₍₃₋ₐ₎ (i)
wobei Hal = Halogenid, ausgewählt aus Chlor, Brom und Iod, wobei beim Vorhandensein mehrerer Halogenide (a>1) diese gleich oder unterschiedlich sein können, R = über ein Kohlenstoff- oder Sauerstoff-Atom an das Phosphor gebundener, organischer Rest, wobei wenn a < 2 ist, die vorhandenen Reste R gleich oder unterschiedlich sein können, und a = 1 bis 3 bedeuten,
mit organischen Verbindungen, die zumindest eine OH-Gruppe aufweisen,
**dadurch gekennzeichnet,**
**dass** die Kondensationsreaktion in Gegenwart von polymeren, schwach basischen Ionenaustauscherharzen auf Basis von Styrol-Divinylbenzol-Copolymeren, die N,N-Dialkyl-Amin-Gruppen tragen, die in der Form des freien Amins vorliegen, durchgeführt wird.

2. Verfahren nach Anspruch 1,
**dadurch gekennzeichnet,**
**dass** als Phosphorverbindung der Formel **i** zumindest eine Verbindung ausgewählt aus den Verbindungen der nachfolgenden Formeln 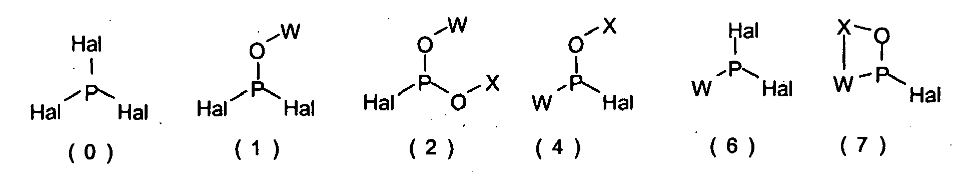 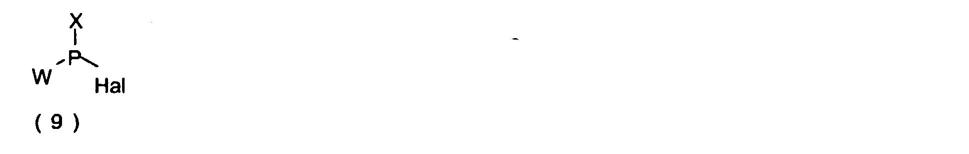 mit W und X gleich substituierte oder unsubstituierte, aliphatische, alicyclische, aliphatisch-alicyclische, heterocyclische, aliphatisch-heterocyclische, aromatisch-aromatische oder aliphatisch-aromatische Kohlenwasserstoffreste mit 1 bis 50 Kohlenstoffatomen, wobei X und W gleich oder unterschiedlich oder kovalent miteinander verknüpft sind,
eingesetzt wird.

3. Verfahren nach Anspruch 1 oder 2,
**dadurch gekennzeichnet,**
**dass** als zumindest eine Hydroxy-Gruppe aufweisende Verbindung zumindest eine substituierte oder unsubstituierte Verbindung, ausgewählt aus Methanol, Ethanol, n-Propanol, i-Propanol, 1-Butanol, 2-Butanol, t-Butanol, 2-Ethylhexanol, i-Nonanol, i-Decanol, i-Tridecanol, Phenol, Phenol-Derivate, 1,4-Dihydroxybenzol, 1,2-Dihydroxybenzol, 1,8-Dihydroxynaphtalin, 1,1'-Binaphtyl-2,2'-diol oder 2,2'-Binaphtyl-1,1'-diol eingesetzt wird, wobei die substituierten Verbindungen Substituenten, ausgewählt aus primären, sekundären oder tertiären Alkylgruppen, alicyclischen Gruppen, aromatischen Gruppen, -N(R⁵)₂, -NHR⁵, -NH₂, Fluor, Chlor, Brom, Jod, -CN, -C(O)-R⁵, - C(O)H oder -C(O)O-R⁵, -CF₃, -O-R⁵, -C(O)N-R⁵, -OC(O)-R⁵ und/oder -Si(R⁵)₃ aufweisen können, mit R⁵ gleich einem monovalenten Kohlenwasserstoffrest, wobei bei mehreren vorhandenen Kohlenwasserstoffreste R⁵ diese gleich oder unterschiedlich sind.

4. Verfahren nach einem der Ansprüche 1 bis 3,
**dadurch gekennzeichnet,**
**dass** als dreiwertige Organophosphor-Verbindung zumindest eine Verbindung, ausgewählt aus den Verbindungen der nachfolgenden Formeln 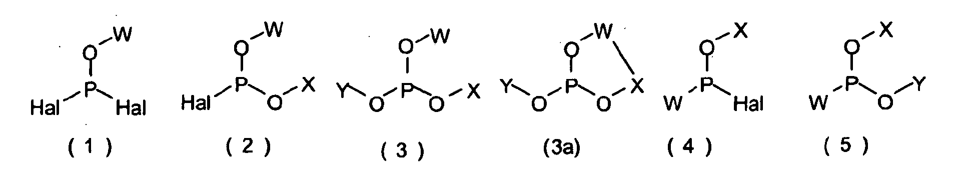 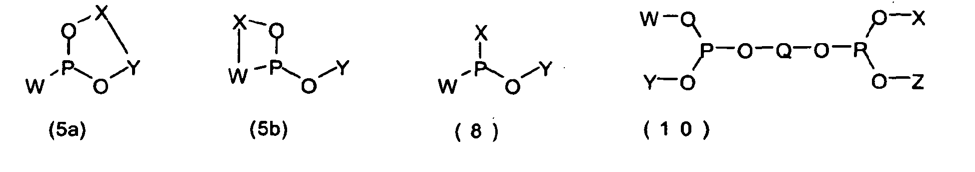 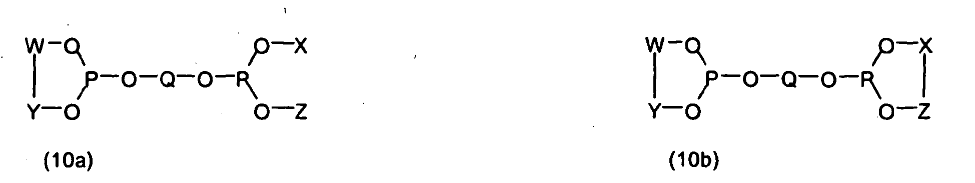 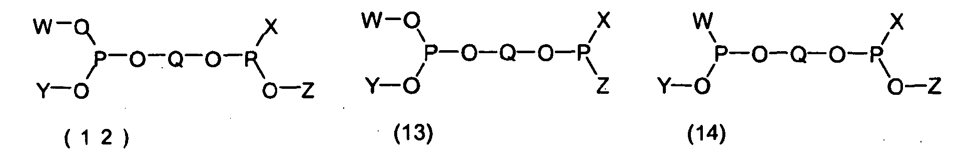 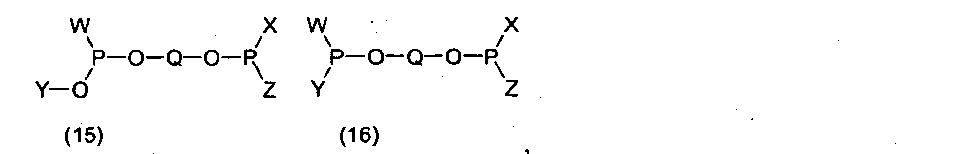 mit W, X, Y und Z gleich substituierte oder unsubstituierte, aliphatische, alicyclische, aliphatisch-alicyclische, heterocyclische, aliphatisch-heterocyclische, aromatisch-aromatische oder aliphatisch-aromatische Kohlenwasserstoffreste mit 1 bis 50 Kohlenstoffatomen, wobei W, X, Y und Z gleich oder unterschiedlich oder kovalent miteinander verknüpft sind, und mit Q gleich ein zumindest zweiwertiger, substituierter oder unsubstituierter aliphatischer, alicyclischer, aliphatisch-alicyclischer, heterocyclischer, aliphatisch-heterocyclischer, aromatischer, aromatisch-aromatischer oder aliphatisch-aromatischer Kohlenwasserstoffrest,
hergestellt wird.

5. Verfahren nach Anspruch 4,
**dadurch gekennzeichnet,**
**dass** zur Herstellung von Verbindungen der Formeln (1), (2), (3), (3a), (4), (5), (5a), (5b) oder (8) jeweils die Phosphorverbindung zusammen mit einem oder mehreren basischen Ionenaustauscherharzen vorgelegt wird und anschließend die OH-Gruppe aufweisende Verbindung zudosiert wird.

6. Verfahren nach Anspruch 4,
**dadurch gekennzeichnet,**
**dass** zur Herstellung von asymmetrischen Diphosphorverbindungen die OH-Gruppen aufweisende Verbindung zusammen mit einem oder mehreren basischen Ionenaustauscherharzen vorgelegt wird und anschließend die Phosphorverbindung zudosiert wird.

7. Verfahren nach einem der Ansprüche 1 bis 6,
**dadurch gekennzeichnet,**
**dass** die Umsetzung jeweils einer zumindest eine Phosphor-Halogen-Bindung aufweisende Verbindung mit einer zumindest eine Hydroxy-Gruppe aufweisenden Verbindung ein Reaktionsschritt ist.

8. Verfahren nach Anspruch 7,
**dadurch gekennzeichnet,**
**dass** bei der Durchführung mehrerer Reaktionsschritte diese kontinuierlich oder diskontinuierlich durchgeführt werden.

9. Verfahren nach Anspruch 7 oder 8,
**dadurch gekennzeichnet,**
**dass** bei der Durchführung mehrerer Reaktionsschritte in den Reaktionsschritten gleiche oder unterschiedliche Ionenaustauscher eingesetzt werden.

10. Verfahren nach einem der Ansprüche 7 bis 9,
**dadurch gekennzeichnet,**
**dass** bei der Durchführung mehrerer Reaktionsschritte in den Reaktionsschritten gleiche oder unterschiedliche Temperaturen eingestellt werden.

11. Verfahren nach zumindest einem der Anspruch 1 bis 10,
**dadurch gekennzeichnet,**
**dass** das Verfahren in Gegenwart eines oder mehrerer Lösemittel durchgeführt wird, wobei die Lösemittel ausgewählt sind aus der Gruppe die Benzol, Chlorbenzol, Toluol, Xylole, Pentan, n-Hexan, n-Heptan, Cyclohexan, Methylcyclohexan, Diethylether, Di-iso-Propylether, Methyl-tert-Butylether, Anisol, Tetrahydrofuran, 1,4-Dioxan, 1,3-Dioxolan, Ethylacetat, Isobutylacetat, tert-Butylacetat, Ethylencarbonat, Propylencarbonat, 1,2-Butylencarbonat, Aceton, 2-Butanon, 3,3-Dimethyl-2-butanon, Benzonitril, Proprionitril, Acetonitril, Lactone, N-Methylpyrrolidon, Dimethylformamid, Dimethylsulfoxid, N-Alkyl-Morpholine und Sulfolan umfasst.

12. Verfahren nach einem der Ansprüche 1 bis 11,
**dadurch gekennzeichnet,**
**dass** der Ionenaustauscher in Form von Partikeln mit einer mittleren Partikelgröße von 10 µm bis 2 mm oder in Form einer festen Packung eingesetzt wird.

13. Verfahren nach einem der Ansprüche 1 bis 12,
**dadurch gekennzeichnet,**
**dass** der Ionenaustauscher vor dem Einsatz im erfindungsgemäßen Verfahren getrocknet wird.

14. Verfahren nach einem der Ansprüche 1 bis 13,
**dadurch gekennzeichnet,**
**dass** das Verfahren in Gegenwart eines Protonenüberträgers durchgeführt wird.

## Claims

1. Process for preparing trivalent organophosphorus compounds by condensing phosphorus compounds of the formula **i**
PHalₐR₍₃₋ₐ₎ (i)
where Hal = halide selected from chlorine, bromine and iodine and may be the same or different when a plurality of halides are present (a > 1), R is an organic radical bonded to the phosphorus via a carbon or oxygen atom, and, when a < 2, the R radicals present may be the same or different, and a = from 1 to 3,
with organic compounds which have at least one OH group,
**characterized in that**
the condensation reaction is carried out in the presence of polymeric, weakly basic ion exchange resins based on styrene-divinylbenzene copolymers which bear N,N-dialkylamine groups which are present in the form of the free amine.

2. Process according to Claim 1,
**characterized in that**
the phosphorus compound of the formula **i** used is at least one compound selected from the compounds of the following formulae 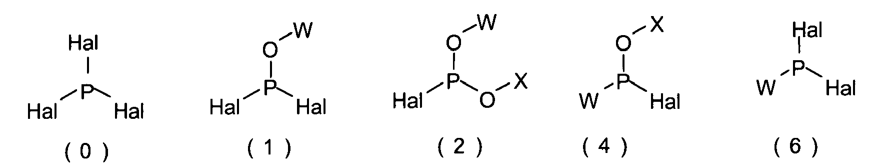 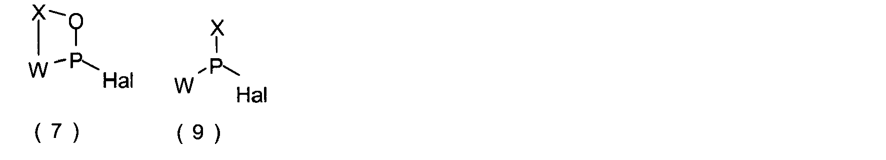 where W and X are substituted or unsubstituted, aliphatic, alicyclic, aliphatic-alicyclic, heterocyclic, aliphatic-heterocyclic, aromatic-aromatic or aliphatic-aromatic hydrocarbons having from 1 to 50 carbon atoms, and X and W are the same or different or covalently joined together.

3. Process according to Claim 1 or 2,
**characterized in that**
the compound used which has at least one hydroxyl group is at least one substituted or unsubstituted compound selected from methanol, ethanol, n-propanol, isopropanol, 1-butanol, 2-butanol, t-butanol, 2-ethylhexanol, isononanol, isodecanol, isotridecanol, phenol, phenol derivatives, 1,4-dihydroxybenzene, 1,2-dihydroxybenzene, 1,8-dihydroxynaphthalene, 1,1'-binaphthyl-2,2'-diol or 2,2'-binaphthyl-1,1'-diol, and the substituted compounds may have substituents selected from primary, secondary and tertiary alkyl groups, alicyclic groups, aromatic groups, -N(R⁵)₂, -NHR⁵, -NH₂, fluorine, chlorine, bromine, iodine, -CN, -C(O)-R⁵, -C(O)H or -C(O)O-R⁵, -CF₃, -O-R⁵, -C (O) N-R⁵, -OC(O)-R⁵ and/or -Si(R⁵)₃, where R⁵ is a monovalent hydrocarbon radical, and, when a plurality of hydrocarbon radicals R⁵ is present, they are the same or different.

4. Process according to one of Claims 1 to 3,
**characterized in that**
the trivalent organophosphorus compound prepared is at least one compound selected from the compounds of the following formulae 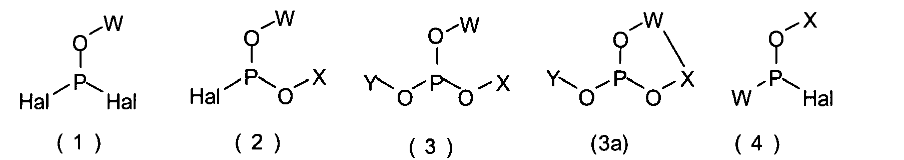 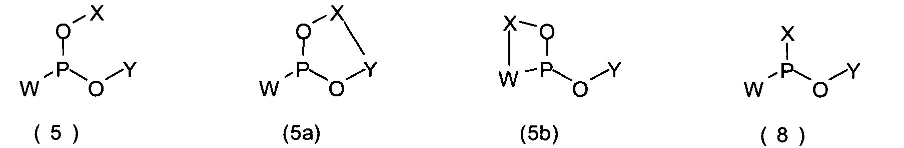 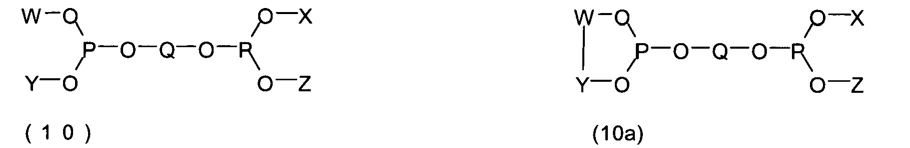 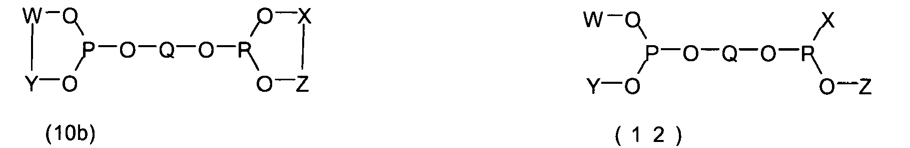 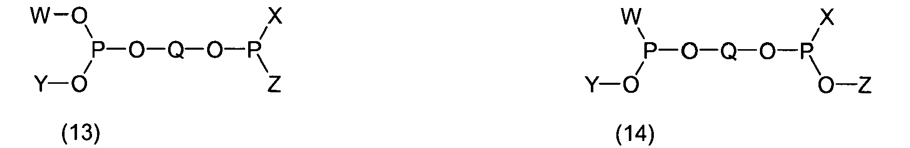 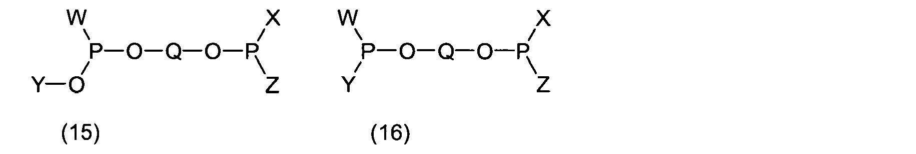 where W, X, Y and Z are each substituted or unsubstituted, aliphatic, alicyclic, aliphatic-alicyclic, heterocyclic, aliphatic-heterocyclic, aromatic-aromatic or aliphatic-aromatic hydrocarbon radicals having from 1 to 50 carbon atoms, and W, X, Y and Z are the same or different or covalently joined together, and where Q is an at least bivalent, substituted or unsubstituted, aliphatic, alicyclic, aliphatic-alicyclic, heterocyclic, aliphatic-heterocyclic, aromatic, aromatic-aromatic or aliphatic-aromatic hydrocarbon radical.

5. Process according to Claim 4,
**characterized in that**
the compounds of the formulae (1), (2), (3), (3a), (4), (5), (5a), (5b) or (8) are each prepared by initially charging the phosphorus compound together with one or more basic ion exchange resins and subsequently metering in the compound having an OH group.

6. Process according to Claim 4,
**characterized in that**
asymmetric diphosphorus compounds are prepared by initially charging the compound having OH groups together with one or more basic ion exchange resins and subsequently metering in the phosphorus compound.

7. Process according to one of Claims 1 to 6,
**characterized in that**
the reaction of in each case a compound which has at least one phosphorus-halogen bond with a compound having at least one hydroxyl group is one reaction step.

8. Process according to Claim 7,
**characterized in that**
when a plurality of reaction steps is carried out, they are carried out continuously or batchwise.

9. Process according to Claim 7 or 8,
**characterized in that**
when a plurality of reaction steps is carried out, the same or different ion exchangers are use in the reaction steps.

10. Process according to one of Claims 7 to 9,
**characterized in that**
when a plurality of reaction steps is carried out, the same or different temperatures are set in the reaction steps.

11. Process according to at least one of Claims 1 to 10,
**characterized in that**
the process is carried out in the presence of one or more solvents which are selected from the group of benzene, chlorobenzene, toluene, xylenes, pentane, n-hexane, n-heptane, cyclohexane, methylcyclohexane, diethyl ether, diisopropyl ether, methyl tert-butyl ether, anisole, tetrahydrofuran, 1,4-dioxane, 1,3-dioxolane, ethyl acetate, isobutyl acetate, tert-butyl acetate, ethylene carbonate, propylene carbonate, 1,2-butylene carbonate, acetone, 2-butanone, 3,3-dimethyl-2-butanone, benzonitrile, proprionitrile, acetonitrile, lactones, N-methylpyrrolidone, dimethylformamide, dimethyl sulphoxide, N-alkylmorpholines and sulpholane.

12. Process according to one of Claims 1 to 11,
**characterized in that**
the ion exchanger is used in the form of particles having an average particle size of from 10 µm to 2 mm or in the form of a fixed package.

13. Process according to one of Claims 1 to 12,
**characterized in that**
the ion exchanger is dried before use in the process according to the invention.

14. Process according to one of Claims 1 to 13,
**characterized in that**
the process is carried out in the presence of a proton transferrer.

## Revendications

1. Procédé pour la préparation de composés organophosphorés trivalents par condensation de composés phosphorés de formule i
PHalₐR(₃₋ₐ) (i)
où
Hal = halogénure, choisi parmi chlore, brome et iode, où, lors de la présence de plusieurs halogénures (a > 1), ceux-ci peuvent être identiques ou différents,
R = un radical organique lié au phosphore via un atome de carbone ou d'oxygène où, lorsque a < 2, les radicaux R présents peuvent être identiques ou différents, et
a = 1 à 3,
avec des composés organiques qui présentent au moins un groupe OH, **caractérisé en ce que** la réaction de condensation est réalisée en présence de résines échangeuses d'ions polymères, faiblement basiques à base de copolymères de styrène-divinylbenzène, qui portent des groupes N,N-dialkylamine, qui se trouvent sous forme de l'amine libre.

2. Procédé selon la revendication 1, **caractérisé en ce qu'**on utilise comme composé phosphoré de formule i au moins un composé choisi parmi les composés des formules suivantes 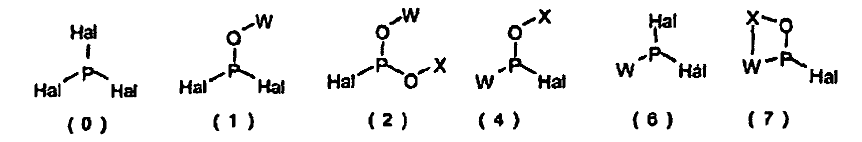 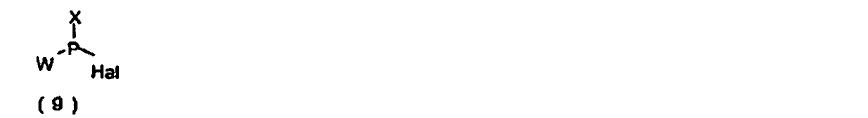 avec W et X représentant des radicaux hydrocarbonés substitués ou non substitués, aliphatiques, alicycliques, aliphatiques-alicycliques, hétérocycliques, aliphatiques-hétérocycliques, aromatiques-aromatiques ou aliphatiques-aromatiques comprenant 1 à 50 atomes de carbone, où X et W sont identiques ou différents ou sont liés l'un à l'autre par covalence.

3. Procédé selon la revendication 1 ou 2, **caractérisé en ce qu'**on utilise comme composé présentant au moins un groupe hydroxy au moins un composé substitué ou non substitué, choisi parmi le méthanol, l'éthanol, le n-propanol, l'i-propanol, le 1-butanol, le 2-butanol, le t-butanol, le 2-éthylhexanol, l'i-nonanol, l'i-décanol, l'i-tridécanol, le phénol, les dérivés du phénol, le 1,4-dihydroxybenzène, le 1,2-dihydroxybenzène, le 1,8-dihydroxynaphtalène, le 1,1'-binaphtyl-2,2'-diol ou le 2,2'-binaphtyl-1,1'-diol, les composés substitués pouvant présenter des substituants choisis parmi les groupes alkyle primaires, secondaires ou tertiaires, les groupes alicycliques, les groupes aromatiques, -N(R⁵)₂, -NHR⁵, -NH₂, fluor, chlore, brome, iode, -CN, -C(O)-R⁵, -C(O)H ou -C(O)O-R⁵, -CF₃, -O-R⁵, -C(O)N-R⁵, -OC(O)-R⁵ et/ou -Si (R⁵)₃, avec R⁵ représentant un radical hydrocarboné monovalent, où, dans le cas de la présence de plusieurs radicaux hydrocarbonés R⁵, ceux-ci sont identiques ou différents.

4. Procédé selon l'une quelconque des revendications 1 à 3, **caractérisé en ce qu'**on prépare comme composé organophosphoré trivalent au moins un composé choisi parmi les composés des formules suivantes 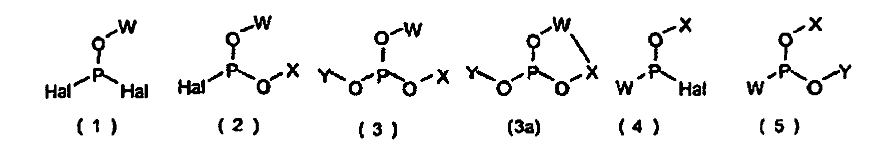 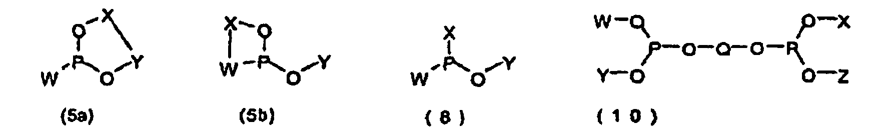 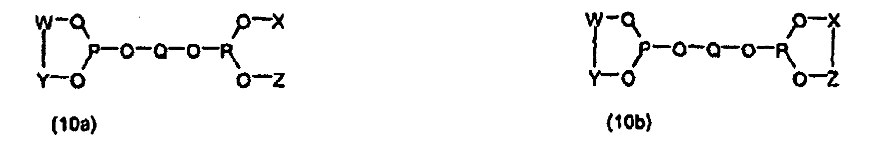 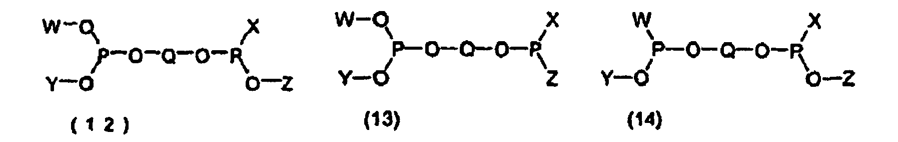 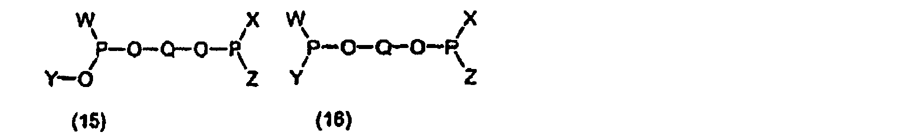 avec W, X, Y et Z représentant des radicaux hydrocarbonés substitués ou non substitués, aliphatiques, alicycliques, aliphatiques-alicycliques, hétérocycliques, aliphatiques-hétérocycliques, aromatiques-aromatiques ou aliphatiques-aromatiques, comprenant 1 à 50 atomes de carbone, W, X, Y et Z étant identiques ou différents ou liés par covalence l'un avec l'autre, et avec Q représentant un radical hydrocarboné au moins divalent, substitué ou non substitué, aliphatique, alicyclique, aliphatique-alicyclique, hétérocyclique, aliphatique-hétérocyclique, aromatique, aromatique-aromatique ou aliphatique-aromatique.

5. Procédé selon la revendication 4, **caractérisé en ce que**, pour la préparation de composés des formules (1), (2), (3), (3a), (4), (5), (5a), (5b) ou (8), on dispose au préalable à chaque fois le composé phosphoré avec une ou plusieurs résines échangeuses d'ions basiques et on ajoute ensuite en dosant le composé présentant un groupe OH.

6. Procédé selon la revendication 4, **caractérisé en ce que** pour la préparation de composés diphosphorés asymétriques, on dispose au préalable le composé présentant les groupes OH avec une ou plusieurs résines échangeuses d'ions basiques et on ajoute ensuite en dosant le composé phosphoré.

7. Procédé selon l'une quelconque des revendications 1 à 6, **caractérisé en ce que** la transformation à chaque fois d'un composé présentant au moins une liaison phosphore-halogène avec un composé présentant au moins un groupe hydroxy est une étape de réaction.

8. Procédé selon la revendication 7, **caractérisé en ce que** lors de la réalisation de plusieurs étapes de réaction, celles-ci sont réalisées de manière continue ou discontinue.

9. Procédé selon la revendication 7 ou 8, **caractérisé en ce que** lors de la réalisation de plusieurs étapes de réaction, on utilise dans les étapes de réaction des échangeurs d'ions identiques ou différents.

10. Procédé selon l'une quelconque des revendications 7 à 9, **caractérisé en ce que** lors de la réalisation de plusieurs étapes de réaction, on règle dans les étapes de réaction des températures identiques ou différentes.

11. Procédé selon au moins l'une quelconque des revendications 1 à 10, **caractérisé en ce que** le procédé est réalisé en présence d'un ou de plusieurs solvants, les solvants étant choisis dans le groupe comprenant le benzène, le chlorobenzène, le toluène, les xylènes, le pentane, le n-hexane, le n-heptane, le cyclohexane, le méthylcyclohexane, le diéthyléther, le diisopropyléther, le méthyl-tert-butyléther, l'anisole, le tétrahydrofuranne, le 1,4-dioxane, le 1,3-dioxolane, l'acétate d'éthyle, l'acétate d'isobutyle, l'acétate de tert-butyle, le carbonate d'éthylène, le carbonate de propylène, le carbonate de 1,2-butylène, l'acétone, la 2-butanone, la 3,3-diméthyl-2-butanone, le benzonitrile, le propionitrile, l'acétonitrile, les lactones, la N-méthylpyrrolidone, le diméthylformamide, le diméthylsulfoxyde, les N-alkyl-morpholines et le sulfolane.

12. Procédé selon l'une quelconque des revendications 1 à 11, **caractérisé en ce que** l'échangeur d'ions est utilisé sous forme de particules avec une grosseur moyenne des particules de 10 µm à 2 mm ou sous forme d'un garnissage solide.

13. Procédé selon l'une quelconque des revendications 1 à 12, **caractérisé en ce que** l'échangeur d'ions est séché avant l'utilisation dans le procédé selon l'invention.

14. Procédé selon l'une quelconque des revendications 1 à 13, **caractérisé en ce que** le procédé est réalisé en présence d'un agent de transfert de protons.
